# EUROPEAN PATENT SPECIFICATION

(11) **EP 3 942 891 B1**
(45) Date of publication and mention of the grant of the patent: **13.12.2023**
(21) Application number: 20713259.8
(22) Date of filing: 19.03.2020
(51) Int. Cl.: H04W 74/08

(54) **METHOD AND APPARATUS FOR CHANNEL ACCESS ADAPTATION AND COMPUTER READABLE MEDIUM**
VERFAHREN UND VORRICHTUNG ZUR KANALZUGRIFFSANPASSUNG UND COMPUTERLESBARES MEDIUM
PROCÉDÉ ET APPAREIL D'ADAPTATION D'ACCÈS À UN CANAL ET SUPPORT LISIBLE PAR ORDINATEUR

(30) Priority: 20.03.2019 WO PCT/CN2019/078875
(43) Date of publication of application: 26.01.2022
(73) Proprietor: Telefonaktiebolaget LM Ericsson (publ), 164 83 Stockholm (SE)
(72) Inventor: WANG, Min, 977 53 Luleå (SE); LIU, Jinhua, Beijing, 100102 (CN)
(74) Representative: Zacco Sweden AB
(86) International application number: PCT/EP2020/057598
(87) International publication number: WO 2020/188029

(56) References cited:
- EP-A1- 3 397 017
- WO-A1-2017/168258
- US-A1- 2004 264 423
- US-A1- 2016 080 974
- SONY: "Considerations on channel access for NR unlicensed operations", 3GPP DRAFT; R1-1812738, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 November 2018 (2018-11-11), XP051554696, Retrieved from the Internet: URL:http://www.3gpp.org/ftp/Meetings%5F3GP P%5FSYNC/RAN1/Docs/R1%2D1812738%2Ezip [retrieved on 2018-11-11]
- MEDIATEK INC: "Enhancements to the RACH procedure for NR-U", 3GPP DRAFT; R2-1813964 ENHANCEMENTS TO THE RACH PROCEDURE FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Chengdu, China; 20181008 - 20181012 27 September 2018 (2018-09-27), XP051523429, Retrieved from the Internet: URL:http://www.3gpp.org/ftp/tsg%5Fran/WG2% 5FRL2/TSGR2%5F103bis/Docs/R2%2D1813964%2Ez ip [retrieved on 2018-09-27]
- "3 Generation Partnership Project; Technical Specification Group Radio Access Network; Evolved Universal Terrestrial Radio Access (E-UTRA); Physical layer procedures (Release 15)", 3GPP STANDARD; TECHNICAL SPECIFICATION; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V15.0.0, 16 January 2018 (2018-01-16), pages 422-479, XP051392689, [retrieved on 2018-01-16] cited in the application

## Description

### Technical field

The present disclosure generally relates to the technical field of communications, and particularly to a method for channel access adaptation at a user equipment (UE) and a corresponding UE, a method for configuring a channel access adaptation rule at a network node and a corresponding network node, and a computer readable medium.

### Background

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

Next generation systems are expected to support a wide range of use cases with varying requirements ranging from fully mobile devices to stationary Internet of Things (IoT) or fixed wireless broadband devices. The traffic pattern associated with many use cases is expected to consist of short or long bursts of data traffic with varying length of waiting period in between (here called inactive state). In New Radio (NR), both License Assisted Access (LAA) and standalone unlicensed operation are to be supported in 3GPP. Hence the procedure of Physical Random Access Channel (PRACH) transmission and/or Scheduling Request (SR) transmission in unlicensed spectrum shall be investigated in 3GPP. In the following, NR-U and channel access procedure for an unlicensed channel based on Listen-Before-Talk (LBT) is introduced. Clear Channel Assessment (CCA) procedure for LTE-LAA is also brief described as a reference to derive problem and solutions.

In order to tackle with the ever increasing data demanding, NR is considered both licensed and unlicensed spectrum. The standardization work for licensed spectrum in Rel-15 was finished in 2018 and defined NR-based Access to Unlicensed Spectrum in Rel-16.Compared to the LTE LAA, NR-Unlicensed (NR-U) access also needs to support Dual Connectivity (DC) and standalone scenarios, where the Media Access Control (MAC) procedures including Random Access Channel (RACH) and scheduling procedure on unlicensed spectrum are subject to the LBT failures, while there was no such restriction in LTE LAA, since there was licensed spectrum in LAA scenario so the RACH and scheduling related signaling can be transmitted on the licensed spectrum instead of unlicensed spectrum.

For Discovery Reference Signal (DRS) transmission such as Primary Synchronization Signal/Secondary Synchronization Signal (PSS/SSS), Physical Broadcast Channel (PBCH), Channel State Information-Reference Signal (CSI-RS), control channel transmission such as Physical Uplink Control Channel/Physical Downlink Control Channel (PUCCH/PDCCH), physical data channel such as Physical Uplink Shared Channel/Physical Downlink Shared Channel (PUSCH/PDSCH), and uplink sounding reference signal such as Sounding Reference Signal (SRS) transmission, channel sensing should be applied to determine the channel availability before the physical signal is transmitted using the channel.

The Radio Resource Management (RRM) procedures in NR-U would be generally rather similar as in LAA, since NR-U is aiming to reuse LAA/enhanced licensed assisted access (eLAA)/further enhanced licensed assisted access (feLAA) technologies as much as possible to handle the coexistence between NR-U and other legacy Radio Access Technologies (RATs). RRM measurements and report comprise special configuration procedure with respect to the channel sensing and channel availability.

Hence, channel access/selection for LAA was one of important aspects for coexistence with other RATs such as Wi-Fi. For instance, LAA has aimed to use carriers that are congested with Wi-Fi.

In licensed spectrum, UE measures Reference Signal Received Power (RSRP), and Reference Signal Received Quality (RSRQ) of the downlink radio channel (e.g. Single Side Band (SSB), CSI-RS), and provides the measurement reports to its serving evolved Node B (eNB)/next generation Node B (gNB). However, they don't reflect the interference strength on the carrier. Another metric Received Signal Strength Indicator (RSSI) can serve for such a purpose. At the eNB/gNB side, it is possible to derive RSSI based on the received RSRP and RSRQ reports, however, this requires that they must be available. Due to the LBT failure, some reports in terms of RSRP or RSRP may be blocked (can be either due to that the reference signal transmission (e.g. Dedicated Reference Signal (DRS)) is blocked in the downlink or the measurement report is blocked in the uplink). Hence, the measurements in terms of RSSI are very useful. The RSSI measurements together with the time information concerning when and how long time that UEs have made the measurements can assist the gNB/eNB to detect the hidden node. Additionally, the gNB/eNB can measure the load situation of the carrier which is useful for the network to prioritize some channels for load balance and channel access failure avoidance purposes.

LTE LAA has defined to support measurements of averaged RSSI and channel occupancy) for measurement reports. The channel occupancy is defined as percentage of time that RSSI was measured above a configured threshold. For this purpose, a RSSI measurement timing configuration (RMTC) includes a measurement duration (e.g. 1~5 ms) and a period between measurements (e.g. {40, 80, 160, 320, 640} ms).

For channel access procedure in NR Unlicensed Spectrum, LBT is designed for unlicensed spectrum co-existence with other Radio Access Technologies (RATs). In this mechanism, a radio device applies a Clear Channel Assessment (CCA) check (i.e. channel sensing) before any transmission. The transmitter involves Energy Detection (ED) over a time period compared to a certain ED threshold in order to determine if a channel is idle. In a case that the channel is determined to be occupied, the transmitter performs a random back-off within a contention window before next CCA attempt. In order to protect the ACK transmissions, the transmitter must defer a period after each busy CCA slot prior to resuming back-off. As soon as the transmitter has grasped access to a channel, the transmitter and its peer radio node are only allowed to perform transmission up to a maximum time duration (namely, a Maximum Channel Occupancy Time (MCOT)). For quality of service (QoS) differentiation, a channel access priority based on the service type has been defined. For example, there are four LBT priority classes defined for differentiation of Contention Window Sizes (CWS) and MCOT between services.

As described in 3GPP TR 38.889, the channel access schemes for NR-based access for unlicensed spectrum can be classified into the following categories:
Category 1: Immediate transmission after a short switching gap
   - This is used for a transmitter to immediately transmit after a UL/DL switching gap inside a Channel Occupancy Time (COT).
   - The switching gap from reception to transmission is to accommodate the transceiver turnaround time and is no longer than 16 µs.
Category 2: LBT without random back-off
   - The duration of time that the channel is sensed to be idle before the transmitting entity transmits is deterministic.
Category 3: LBT with random back-off with a contention window of fixed size
   - The LBT procedure has the following procedure as one of its components. The transmitting entity draws a random number N within a contention window, where N is an integer throughout the specification. The size of the contention window is specified by the minimum and maximum value of N. The size of the contention window is fixed. The random number N is used in the LBT procedure to determine the duration of time that the channel is sensed to be idle before the transmitting entity transmits on the channel.
Category 4: LBT with random back-off with a contention window of variable size
   - The LBT procedure has the following procedure as one of its components. The transmitting entity draws a random number N within a contention window. The size of contention window is specified by the minimum and maximum value of N. The transmitting entity can vary the size of the contention window when drawing the random number N. The random number N is used in the LBT procedure to determine the duration of time that the channel is sensed to be idle before the transmitting entity transmits on the channel.

For different transmissions in a COT and different channels/signals to be transmitted, different categories of channel access schemes can be used.

For LBT procedure of LTE-LAA Systems, the CCA schemes of LTE-LAA are defined in 3GPP TS 36.213-V15.0.0. For LTE-LAA, there are two typical LBT schemes: Type 1 and Type 2. Type 2 uses short LBT interval of 25 ms, which is composed of a defer interval of 16 ms and a slot of 9 µs. Type1 corresponding to Category 4 LBT scheme is used for channel assessment for UL transmissions.

The eNB may transmit a transmission including PDSCH on a channel on which LAA Scell(s) transmission(s) are performed, after first sensing the channel to be idle during the slot durations of a defer duration *T_{d}*; and after the counter *N* is zero in step 4. The counter *N* is adjusted by sensing the channel for additional slot duration(s) according to the steps below:
1) Set *N = Nᵢₙᵢₜ,* where *Nᵢₙᵢₜ* is a random number uniformly distributed between 0 and *CWₚ,* and go to step 4);
2) If *N* > 0 and the eNB chooses to decrement the counter, set *N* = *N* - 1;
3) Sense the channel for an additional slot duration, and if the additional slot duration is idle, go to step 4); else, go to step 5);
4) If *N* = 0, stop; else, go to step 2).
5) Sense the channel during the slot durations of an additional defer duration *T_{d}*;
6) If the channel is sensed to be idle during the slot durations of the additional defer duration *T_{d},* go to step 2; else, go to step 5);

If an eNB has not finished a transmission including PDSCH on a channel on which LAA Scell(s) transmission(s) are performed after step 4) in the procedure above, the eNB may transmit a transmission including PDSCH on the channel, after sensing the channel to be idle at least in the slot durations of an additional defer duration*T_{d}*.

The defer duration *T_{d}* consists of duration 16us ≤ *T_{f}* ≤ 16*us* + *Tₛ*immediately followed by *mₚ* consecutive slot durations where each slot duration is 9*us* ≤ *Tₛₗ* ≤ 9*us* + *Tₛ*, and *T_{f}* includes an idle slot duration *Tₛₗ* at start of *T_{f}*;

A slot duration *Tₛₗ* is considered to be idle if the eNB senses the channel during the slot duration, and the power detected by the eNB for at least 4*us* within the slot duration is less than energy detection threshold *X*_{Thresh}. Otherwise, the slot duration *Tₛₗ* is considered to be busy.

*CW_{min,p}* ≤ *CWₚ* ≤ *CW_{max,p}* is the contention window.

*CW_{min,p}* and *CW_{max,p}* are chosen before step 1) of the procedure above.

*mₚ, CW_{min,p}* and *CW_{max,p}* are based on channel access priority class associated with the eNB transmission, as shown in Table 1 below.

If the eNB transmits discovery signal transmission(s) not including PDSCH when *N* > 0 in the procedure above, the eNB shall not decrement N during the slot duration(s) overlapping with discovery signal transmission.

The eNB shall not continuously transmit on a channel on which the LAA Scell(s) transmission(s) are performed, for a period exceeding *T_{m cot,p}* as given in Table 1. p is determined by the traffic priority class. The high traffic priority class corresponds to a small p, which means short LBT duration is applied.

For *p* = 3 and *p* = 4 (e.g. video traffic, web browsing or FTP), if the absence of any other technology sharing the carrier can be guaranteed on a long term basis (e.g. by level of regulation), *T_{m cot,p}* = 10ms, otherwise, *T_{m cot,p}* = 8*ms.*

**Table 1: Channel Access Priority Class**

| **Channel Access Priority Class (*p*)** | *mₚ* | *CW*_{min,*p*} | *CW*_{max,*p*} | *T*_{*m*cot,*p*} | **allowed** *CW ₚ* **sizes** |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

In Section 15.2 of 3GPP TS 36.231 V15.0.0, there are CCA preemption procedures defined for a UE with multiple Logical Channels (LCHs) and the LCHs have different channel access priority classes (CAPCs).

As specified in Section 15.2 of 3GPP TS 36.231 V15.0.0, if the UE receives an UL grant and the DCI indicates a PUSCH transmission starting in subframe n using Type 1 channel access procedure, and if the UE has an ongoing Type 1 channel access procedure before subframe n,
- if the UL CAPC value *p*₁ used for the ongoing Type 1 channel access procedure is same or larger than the UL CAPC value *p*₂ indicated in the DCI, the UE may transmit the PUSCH transmission in response to the UL grant by accessing the carrier by using the ongoing Type 1 channel access procedure.
- if the UL CAPC value *p*₁ used for the ongoing Type 1 channel access procedure is smaller than the UL CAPC value *p*₂ indicated in the DCI, the UE shall terminate the ongoing channel access procedure.

In LTE LAA, the Type 1 LBT refers to the Category 4 LBT in NR-U.

An CCA pre-emption procedure is described according to the above description, wherein
1) the second channel access with a lower CAPC value (i.e., a higher channel access priority level) can rely on the on-going channel access procedure with a higher CAPC value (i.e., a lower channel access priority level);
2) the ongoing channel access procedure (i.e. CCA procedure) according to a first grant can be preempted by a second grant if the first grant has a lower CAPC value (i.e., a higher channel access priority level) than that of the second grant, meaning that the first grant has been blocked since it was too aggressive. This is not always the best choice. In this case, it would be better to reinitiate a second channel access procedure with less aggressive channel access mechanism.

Such existing mechanisms may not be efficient in terms of latency performance. The general intention was to choose the lowest channel access priority level among all logical channels with data available for channel access. There are several drawbacks with the existing mechanism. For example, the design of existing mechanisms was mainly aimed to how to avoid channel congestion. It is not latency efficient for services with critical QoS requirements. The LBT/CCA failure occurrence is a random event, which means that it may occur due to an instantaneous peak of channel congestion. It is not delay efficient in this case to allow a low priority level channel access to terminate a high priority level channel access. Further, it is not always true that the channel assessment time of a newly started channel access procedure is shorter than the rest time of an ongoing channel access procedure because that for the ongoing channel access procedure, part of the channel access procedure has been executed and the rest time to complete the ongoing channel access procedure may be shorter than the new channel access procedure according to a higher CAPC value. In this case, using a new channel access procedure to pre-empt the ongoing channel access procedure may miss the target transmission start.

As another issue, NR-U will support transmission of PRACH, PUCCH in an NR-U cell where the NR-U cell is the primary cell. Based on latest progress in the 3GPP, those transmission may apply the Category 4 LBT same as that for data transmission. The above existing CCA preemption procedure is insufficient since the procedure itself doesn't cover how to handle CCA clashing between a UL control signaling transmission (e.g., PRACH, PUCCH, SRS) and a data transmission.

In summary, with the present channel access procedure preemption scheme, improper channel access preemption may occur which results in: lower probability to access the channel, additional latency incurred to the service with critical QoS requirements, and shorter time to occupy the channel.

Non-patent literature "SONY, "Considerations on channel access for NR unlicensed operations", vol. RAN WG1, no. Spokane, USA; 20181112 - 20181116, (20181111), 3GPP DRAFT; R1-1812738, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings%5F3GPP%5FSYNC/RAN1/Docs/R1%2D1812738 %2Ezip, (20181111)" discloses various LBT options per channel type and further that NR could adopt LBT categories with fast processing depending on transmission duration, information type or QoS, condition of channel occupancy, the degree of congestion, etc.

WO2017168258A1 discloses methods and apparatuses for adjusting a CWS value between a predefined minimal CWS value and a predefined maximal CWS value at a UE side for UL transmissions. The method includes performing a plurality of CCAs within one UL LBT round to determine measurements of channel conditions in respective CCAs; and adjusting the CWS value according to the measurements of channel conditions in the plurality of CCAs for use in the next UL LBT round. Another method includes acquiring information about HARQ feedback values for a reference subframe set; and adjusting the CWS value according to the information for use in a next LBT round.

US2016080974A1 discloses methods and apparatus for adjusting an operating characteristic of a wireless communication network based on load to increase quality of service (QoS). One aspect provides a method of communicating in a wireless communication network including a plurality of stations. The method includes determining a load of the wireless communication network and whether one or more of the plurality of stations are satisfying their QoS requirements. The method further includes determining an adjustment to the wireless communication network based at least in part on the load of the wireless communication network so as to increase a number of the plurality of stations that satisfy their QoS requirements, the adjustment based on one or more of a clear channel assessment threshold and/or a request to send and clear to send messaging in.

Non-patent literature "MEDIATEK INC, "Enhancements to the RACH procedure for NR-U", vol. RAN WG2, no. Chengdu, China; 20181008 - 20181012, (20180927), 3GPP DRAFT; R2-1813964 ENHANCEMENTS TO THE RACH PROCEDURE FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA, URL: http://www.3gpp.org/ftp/tsg%5Fran/WG2%5FRL2/TSGR2%5F103bis/Docs/R2%2D18 13964%2Ezip, (20180927)" discloses in NR-U, a RA backoff time for UEs being adjusted based on channel conditions.

### Summary

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention. The present disclosure is provided to solve or alleviate at least one of the above problems in the existing mechanism. In particular, the technical solutions of the present disclosure propose a channel access procedure adaptation scheme based on monitored channel occupancy or LBT/CCA statistics, which may determine channel access procedure (i.e. the CCA procedure) preemption according to the actual channel access probability comparison rather than the channel access priority (i.e. CAPC) value comparison. In addition, the technical solutions of the present disclosure propose also discusses conditional CAPC value selection schemes.

According to a first aspect of the present disclosure, a method at a LTE is provided. The method comprises monitoring channel occupancy or LBT/ CCA statistics of a channel, and adapting a channel access procedure for the channel based on the monitored channel occupancy or LBT/CCA statistics.

Said adapting the channel access procedure for the channel based on the monitored channel occupancy or LBT statistics is performed according to rules configured by a network node for the UE or predefined for the UE. The rules comprise one of the two following alternatives:
In a case where the monitored channel occupancy or LBT/CCA failure ratio characterizing the LBT/CCA statistics is below a predetermined threshold, or measurements of the monitored channel occupancy indicate that there is no other access device contends the channel with the UE, if a first channel access priority level for an on-going channel access procedure associated with a first transmission is not higher than a second channel access priority level for a new channel access procedure associated with a second transmission, the UE preempting the on-going channel access procedure with the new channel access procedure for the second transmission.

In a case where the monitored channel occupancy or LBT/CCA failure ratio characterizing the LBT/CCA statistics is not below a predetermined threshold, if a first channel access priority level for an ongoing channel access procedure associated with a first transmission is not higher than a second channel access priority level for a new channel access procedure associated with a second transmission, the UE using the on-going channel access procedure for the second transmission; and if the first channel access priority level for the on-going channel access procedure associated with the first transmission is higher than the second channel access priority level for the new channel access procedure associated with the second transmission, the UE preempting the on-going channel access procedure with the new channel access procedure for the second transmission.

In an exemplary embodiment, each of the first transmission and the second transmission is control signaling transmission or data transmission.

In an exemplary embodiment, the rules further include: if the new channel access procedure is for control signaling transmission and the on-going channel access procedure is for data transmission, the UE preempting the on-going channel access procedure for the data transmission with the new channel access procedure for the control signaling transmission.

In an exemplary embodiment, the control signaling includes at least one of PUCCH, PRACH, SRS, and Radio Resource Control (RRC) signaling.

In an exemplary embodiment, the rules further include: no matter whether a first channel access priority level for an on-going channel access procedure associated with a first transmission is higher or lower than a second channel access priority level for a new channel access procedure associated with a second transmission, the UE preempting the on-going channel access procedure with the new channel access procedure for the second transmission in a case where one of following conditions fulfills:
- an N value for determining a duration of time that the channel is sensed to be idle before transmission on the channel is randomly generated according to the second channel access priority level, and a total required time for the new channel access procedure for the second transmission is shorter than a rest time of the ongoing channel access procedure;
- during a Maximum Channel Occupation Time (MCOT) according to the first channel access priority level or the second channel access priority level, the UE can finish an expected future transmission to empty its buffer.

In an exemplary embodiment, the rules further include: for a scheduled transmission preconfigured with a first channel access priority level, the UE selecting a second channel access priority level according to a required Channel Occupation Time (COT) for the transmission, wherein the second channel access priority level is lower than the first channel access priority level.

In an exemplary embodiment, the rules further include: in a case where a grant is configured for at least one service, the UE using a channel access procedure associated with a channel access priority level which is related to one of the at least one service for a transmission associated with the one service.

In an exemplary embodiment, the rules configured by the network node are applied to the UE via UE specific signaling or cell specific signaling.

In an exemplary embodiment, the rules are made per one of: UE, Media Access Control (MAC) entity, cell, carrier, Bandwidth Part (BWP), channel, subband.

According to a second aspect of the present disclosure, a UE is provided. The UE includes: at least one processor, and at least one memory, storing instructions which, when executed on the at least one processor, cause the at least one processor to perform the method according to the first aspect of the present disclosure.

According to third aspect of the present disclosure, a computer readable storage medium having computer program instructions stored thereon, the computer program instructions, when executed by at least one processor in a UE, causing the at least one processor to perform the method according to the first aspect of the present disclosure.

According to fourth aspect of the present disclosure, a method at a network node is provided. The method includes: configuring, for a UE, rules of adapting a channel access procedure for a channel based on monitored channel occupancy or LBT/CCA statistics of the channel. The rules comprise one of the two following alternatives:
In a case where the monitored channel occupancy or LBT/CCA failure ratio characterizing the LBT/CCA statistics is below a predetermined threshold, or measurements of the monitored channel occupancy indicate that there is no other access device contends the channel with the UE, if a first channel access priority level for an on-going channel access procedure associated with a first transmission is not higher than a second channel access priority level for a new channel access procedure associated with a second transmission, the UE preempting the on-going channel access procedure with the new channel access procedure for the second transmission.

In a case where the monitored channel occupancy or LBT/CCA failure ratio characterizing the LBT/CCA statistics is not below a predetermined threshold, if a first channel access priority level for an ongoing channel access procedure associated with a first transmission is not higher than a second channel access priority level for a new channel access procedure associated with a second transmission, the UE using the on-going channel access procedure for the second transmission; and if the first channel access priority level for the on-going channel access procedure associated with the first transmission is higher than the second channel access priority level for the new channel access procedure associated with the second transmission, the UE preempting the on-going channel access procedure with the new channel access procedure for the second transmission.

In an exemplary embodiment, each of the first transmission and the second transmission is control signaling transmission or data transmission.

In an exemplary embodiment, the rules further include: if the new channel access procedure is for control signaling transmission and the on-going channel access procedure is for data transmission, the UE preempting the on-going channel access procedure for the data transmission with the new channel access procedure for the control signaling transmission.

In an exemplary embodiment, the control signaling includes at least one of PUCCH, PRACH, SRS, and RRC signaling.

In an exemplary embodiment, the rules further include: no matter whether a first channel access priority level for an on-going channel access procedure associated with a first transmission is higher or lower than a second channel access priority level for a new channel access procedure associated with a second transmission, the UE preempting the on-going channel access procedure with the new channel access procedure for the second transmission in a case where one of following conditions fulfills:
- an N value for determining a duration of time that the channel is sensed to be idle before transmission on the channel is randomly generated according to the second channel access priority level, and a total required time for the new channel access procedure for the second transmission is shorter than a rest time of the ongoing channel access procedure;
- during a MCOT according to the first channel access priority level or the second channel access priority level, the UE can finish an expected future transmission to empty its buffer.

In an exemplary embodiment, the rules further include: for a scheduled transmission preconfigured with a first channel access priority level, the UE selecting a second channel access priority level according to a required COT for the transmission, wherein the second channel access priority level is lower than the first channel access priority level.

In an exemplary embodiment, the rules further include: in a case where a grant is configured for at least one service, the UE using a channel access procedure associated with a channel access priority level which is related to one of the at least one service for a transmission associated with the one service.

In an exemplary embodiment, the rules configured by the network node are applied to the UE via UE specific signaling or cell specific signaling.

In an exemplary embodiment, the rules are made per one of: UE, MAC entity, cell, carrier, BWP, channel, subband.

According to fifth aspect of the present disclosure, a network node is provided. The network node includes at least one processor, and at least one memory, storing instructions which, when executed on the at least one processor, cause the at least one processor to perform the method according to the fourth aspect of the present disclosure.

According to sixth aspect of the present disclosure, a computer readable storage medium having computer program instructions stored thereon, the computer program instructions, when executed by at least one processor in a network node, causing the at least one processor to perform the method according to the fourth aspect of the present disclosure.

According to a seventh aspect of the present disclosure, a communication system is provided. The communication system includes a host computer including: processing circuitry configured to provide user data; and a communication interface configured to forward the user data to a cellular network for transmission to a UE. The cellular network includes a base station, a transmission point, relay node, an IAB node or a UE having a radio interface and processing circuitry. The base station's processing circuitry is configured to perform the method according to the first or fourth aspect of the present disclosure.

In an exemplary embodiment, the communication system can further include the base station.

In an exemplary embodiment, the communication system can further include the UE. The UE is configured to communicate with the base station.

In an exemplary embodiment, the processing circuitry of the host computer can be configured to execute a host application, thereby providing the user data. The UE can include processing circuitry configured to execute a client application associated with the host application.

According to an eighth aspect of the present disclosure, a method is provided. The method is implemented in a communication system including a host computer, a base station and a UE. The method includes: at the host computer, providing user data; and at the host computer, initiating a transmission carrying the user data to the UE via a cellular network including the base station. The base station can perform the method according to the first aspect of the present disclosure.

In an exemplary embodiment, the method further can include: at the base station, transmitting the user data.

In an exemplary embodiment, the user data can be provided at the host computer by executing a host application. The method can further include: at the UE, executing a client application associated with the host application.

According to a ninth aspect of the present disclosure, a communication system is provided. The communication system includes a host computer including: processing circuitry configured to provide user data; and a communication interface configured to forward user data to a cellular network for transmission to a UE. The UE includes a radio interface and processing circuitry. The UE's processing circuitry is configured to perform the method according to the first aspect of the present disclosure.

In an exemplary embodiment, the communication system can further include the UE.

In an exemplary embodiment, the cellular network can further include a base station configured to communicate with the UE.

In an exemplary embodiment, the processing circuitry of the host computer can be configured to execute a host application, thereby providing the user data. The UE's processing circuitry can be configured to execute a client application associated with the host application.

According to a tenth aspect of the present disclosure, a method is provided. The method is implemented in a communication system including a host computer, a base station and a UE. The method includes: at the host computer, providing user data; and at the host computer, initiating a transmission carrying the user data to the UE via a cellular network including the base station. The UE can perform the method according to the fourth aspect of the present disclosure.

In an exemplary embodiment, the method can further include: at the UE, receiving the user data from the base station.

According to an eleventh aspect of the present disclosure, a communication system is provided. The communication system includes a host computer including: a communication interface configured to receive user data originating from a transmission from a UE to a base station. The UE includes a radio interface and processing circuitry. The UE's processing circuitry is configured to: perform the method according to the first aspect of the present disclosure.

In an exemplary embodiment, the communication system can further include the UE.

In an exemplary embodiment, the communication system can further include the base station. The base station can include a radio interface configured to communicate with the UE and a communication interface configured to forward to the host computer the user data carried by a transmission from the UE to the base station.

In an exemplary embodiment, the processing circuitry of the host computer can be configured to execute a host application. The UE's processing circuitry can be configured to execute a client application associated with the host application, thereby providing the user data.

In an exemplary embodiment, the processing circuitry of the host computer can be configured to execute a host application, thereby providing request data. The UE's processing circuitry can be configured to execute a client application associated with the host application, thereby providing the user data in response to the request data.

According to a twelfth aspect of the present disclosure, a method is provided. The method is implemented in a communication system including a host computer, a base station and a UE. The method includes: at the host computer, receiving user data transmitted to the base station from the UE. The UE can perform the method according to the first aspect of the present disclosure.

In an exemplary embodiment, the method can further include: at the UE, providing the user data to the base station.

In an exemplary embodiment, the method can further include: at the UE, executing a client application, thereby providing the user data to be transmitted; and at the host computer, executing a host application associated with the client application.

In an exemplary embodiment, the method can further include: at the UE, executing a client application; and at the UE, receiving input data to the client application, the input data being provided at the host computer by executing a host application associated with the client application. The user data to be transmitted is provided by the client application in response to the input data.

According to a thirteenth aspect of the present disclosure, a communication system is provided. The communication system includes a host computer including a communication interface configured to receive user data originating from a transmission from a UE to a base station. The base station includes a radio interface and processing circuitry. The base station's processing circuitry is configured to perform the method according to the first or fourth aspect of the present disclosure.

In an exemplary embodiment, the communication system can further include the base station.

In an exemplary embodiment, the communication system can further include the UE. The UE can be configured to communicate with the base station.

In an exemplary embodiment, the processing circuitry of the host computer can be configured to execute a host application; the UE can be configured to execute a client application associated with the host application, thereby providing the user data to be received by the host computer.

According to a fourteenth aspect of the present disclosure, a method is provided. The method is implemented in a communication system including a host computer, a base station and a UE. The method includes: at the host computer, receiving, from the base station, user data originating from a transmission which the base station has received from the UE. The base station can perform the method according to the first or fourth aspect of the present disclosure.

In an exemplary embodiment, the method can further include: at the base station, receiving the user data from the UE.

In an exemplary embodiment, the method can further include: at the base station, initiating a transmission of the received user data to the host computer.

The technical solutions according to the embodiments of the present disclosure may achieve at least benefits as follows:
A higher channel access probability can be achieved for both high and low priority class;
A Long channel occupation time can be achieved without violating the CCA rules.

### Brief description of the drawings

The objects, advantages and characteristics of the present disclosure will be more apparent, according to descriptions of preferred embodiments in connection with the drawings, in which:
FIG. 1 schematically shows a flowchart illustrating a method at a UE for channel access adaptation according to an exemplary embodiment of the present disclosure;
FIG. 2 is a block diagram of a UE according to an exemplary embodiment of the present disclosure.
FIG. 3 is a block diagram of a UE according to another exemplary embodiment of the present disclosure.
FIG. 4 is a flowchart illustrating a method at a network node for configuring a channel access adaptation rule according to an exemplary embodiment of the present disclosure.
FIG. 5 is a block diagram of a network node according to an exemplary embodiment of the present disclosure.
FIG. 6 is a block diagram of a network node according to another exemplary embodiment of the present disclosure.
FIG. 7 schematically illustrates a telecommunication network connected via an intermediate network to a host computer.
FIG. 8 is a generalized block diagram of a host computer communicating via a base station with a UE over a partially wireless connection.
FIGS. 9 to 12 are flowcharts illustrating methods implemented in a communication system including a host computer, a base station and a UE.

It should be noted that throughout the drawings, same or similar reference numbers are used for indicating same or similar elements; various parts in the drawings are not drawn to scale, but only for an illustrative purpose, and thus should not be understood as any limitations and constraints on the scope of the present disclosure.

### Detailed description

Hereinafter, the principle of the present disclosure will be described with reference to illustrative embodiments. Some of the embodiments contemplated herein will now be described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

References in the specification to "one embodiment," "an embodiment," "an example embodiment," etc. indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The terminology used herein is for the purpose of describing particular embodiments only and is not intended to be liming of exemplary embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/or combinations thereof.

The techniques described herein may be used for various wireless communication networks such as CDMA, TDMA, FDMA, OFDMA, SC-FDMA, LTE and other networks developed in the future. The terms "network" and "system" are often used interchangeably. For illustration only, certain aspects of the techniques are described below for the next, i.e. the 5th generation of wireless communication network, such as NR. However, it will be appreciated by the skilled in the art that the techniques described herein may also be used for other wireless networks such as LTE and corresponding radio technologies mentioned herein as well as wireless networks and radio technologies proposed in the future.

As used herein, the term "network node" refers to a device in a wireless communication network via which a terminal device or another network node accesses the network and receives services therefrom. The network node refers to a base station (BS), an access point (AP), or any other suitable device in the wireless communication network. The BS may be, for example, a node B (NodeB or NB), an evolved NodeB (eNodeB or eNB), or gNB, a Remote Radio Unit (RRU), a radio header (RH), a remote radio head (RRH), a relay, a low power node such as a femto, a pico, and so forth. Yet further examples of the network node may include multi-standard radio (MSR) radio equipment such as MSR BSs, network controllers such as radio network controllers (RNCs) or base station controllers (BSCs), base transceiver stations (BTSs), transmission points, transmission nodes. More generally, however, the network node may represent any suitable device (or group of devices) capable, configured, arranged, and/or operable to enable and/or provide a terminal device access to the wireless communication network or to provide some service to a terminal device that has accessed the wireless communication network.

The term "terminal device" refers to any end device that can access a wireless communication network and receive services therefrom. By way of example and not limitation, the terminal device refers to a mobile terminal, UE (user equipment), or other suitable devices. The UE may be, for example, a SS (Subscriber Station), a Portable Subscriber Station, a MS (Mobile Station), or an AT (Access Terminal), a relay node. The terminal device may include, but not limited to, portable computers, image capture terminal devices such as digital cameras, gaming terminal devices, music storage and playback appliances, a mobile phone, a cellular phone, a smart phone, VoIP (voice over IP) phones, wireless local loop phones, a tablet, a wearable device, a PDA (personal digital assistant), portable computers, desktop computer, image capture terminal devices such as digital cameras, gaming terminal devices, music storage and playback appliances, wearable terminal devices, vehicle-mounted wireless terminal devices, wireless endpoints, mobile stations, LEE (laptop-embedded equipment), LME (laptop-mounted equipment), USB dongles, smart devices, wireless CPE (customer-premises equipment) and the like. In the following description, the terms "terminal device", "terminal", "user equipment" and "UE" may be used interchangeably. As one example, a terminal device may represent a UE configured for communication in accordance with one or more communication standards promulgated by the 3rd Generation Partnership Project (3GPP), such as 3GPP's GSM, UMTS, LTE, and/or 5G standards. As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the wireless communication network. Instead, a UE may represent a device that is intended for sale to, or operation by, a human user but that may not initially be associated with a specific human user.

As yet another example, in an IOT (Internet of Things) scenario, a terminal device may represent a machine or other device that performs monitoring and/or measurements, and transmits the results of such monitoring and/or measurements to another terminal device and/or network equipment. The terminal device may in this case be a M2M (machine-to-machine) device, which may in a 3GPP context be referred to as an MTC device. As one particular example, the terminal device may be a UE implementing the 3GPP NB-IoT standard. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

As used herein, a downlink, DL transmission refers to a transmission from the network node to a terminal device, and an uplink, UL transmission refers to a transmission in an opposite direction.

As used herein, the term "and/or" includes any and all combinations of one or more of the associated listed terms.

In the following description and claims, unless defined otherwise, all technical and scientific terms used herein have the same meaning as commonly understood by one of ordinary skills in the art to which this disclosure belongs.

It will be appreciated that although the embodiments of the present disclosure are exemplified hereinafter to be applied to the unlicensed spectrum scenarios in the context of NR-U, the basic idea of the present disclosure is also applicable to other unlicensed operation scenarios such as LTE LAA/enhanced LAA (eLAA)/ further enhancement of LAA (feLAA) etc.

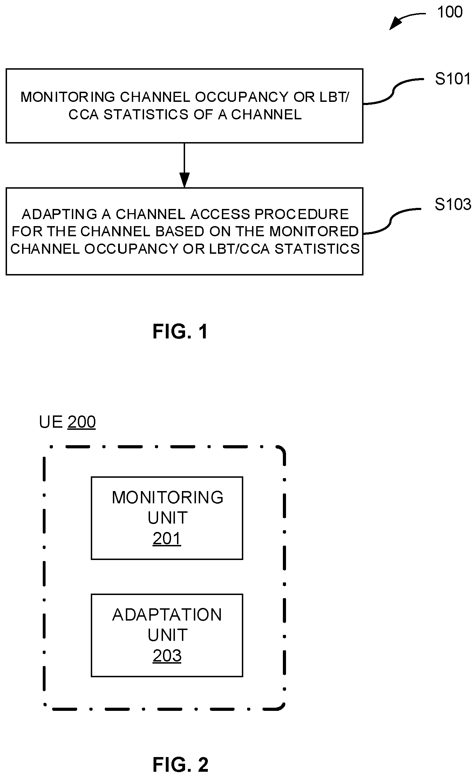

Hereinafter, a method at a UE for channel access adaptation according to an exemplary embodiment of the present disclosure will be described with reference to FIG. 1. The method according to the exemplary embodiment of the present disclosure proposes how to adapt the channel access (i.e., CCA/LBT) procedure, e.g., to perform CCA/LBT procedure preemption or clash handling, in a case where the UE has an ongoing channel access procedure according to a first CAPC value for a first transmission and the UE is configured with a second transmission whose channel access procedure is according to a second CAPC value.

FIG. 1 is a flowchart illustrating a method 100 for channel access adaptation according to an exemplary embodiment of the present disclosure. The method 100 may be performed at a UE. As shown in FIG. 1, the method 100 for channel access adaptation includes steps S101 and S103. In step S101, the UE monitors channel occupancy or LBT/CCA statistics of a channel. For example, the UE may monitor an LBT/CCA failure ratio, which may characterize the LBT/CCA statistics. In step S103, the UE adapts a channel access procedure for the channel based on the monitored channel occupancy or LBT/CCA statistics.

In particular, step S103 is performed according to at least one of rules. The rules may be configured by a network node (e.g., gNB) for the UE, or may be predefined by protocols for the UE. In a case where the rules are configured by the network node for the UE, the rules may be applied via either UE specific signaling or cell specific signaling. The cell specific signaling may be system message or cell specific PDCCH order. The UE specific signaling may be RRC signaling, MAC CE or PDCCH order.

There are various rules configured or predefined for the UE. The rules include: in a case where the monitored channel occupancy or LBT/CCA failure ratio characterizing the LBT/CCA statistics is below a predetermined threshold, or measurements of the monitored channel occupancy indicate that there is no other access device contends the channel with the UE in a cell/carrier/BWP/channel/subband, if a first CAPC value for an on-going channel access procedure associated with a first transmission is not smaller than a second CAPC value for a new channel access procedure associated with a second transmission, the UE preempting/terminating the on-going channel access procedure with the new channel access procedure for the second transmission if the ongoing channel access procedure is clashing with the new channel access procedure.

Alternatively, the rules include: in a case where the monitored channel occupancy or LBT/CCA failure ratio characterizing the LBT/CCA statistics is not below a predetermined threshold, if a first CAPC value for an on-going channel access procedure associated with a first transmission is not smaller than a second CAPC value for a new channel access procedure associated with a second transmission, the UE using the on-going channel access procedure for the second transmission; and if the first CAPC value for the on-going channel access procedure associated with the first transmission is smaller than the second CAPC value for the new channel access procedure associated with the second transmission, the UE preempting/terminating the on-going channel access procedure with the new channel access procedure for the second transmission. As a higher CAPC indicates a lower priority level of service while a lower CAPC indicates a higher priority level of service. According to the rules, the starvation of low priority service can be avoided.

The above transmissions, i.e., either the first transmission or the second transmission, may be control signaling transmission or data transmission.

The rules may further include, according to an exemplary embodiment: if the new channel access procedure is for control signaling transmission and the on-going channel access procedure is for data transmission, the UE preempting/terminating the ongoing channel access procedure for the data transmission with the new channel access procedure for the control signaling transmission. The control signaling may include at least one of PUCCH, PRACH, SRS, and RRC signaling.

In a third example, the rules may further include: no matter whether a first CAPC value for an on-going channel access procedure associated with a first transmission is smaller or larger than a second CAPC value for a new channel access procedure associated with a second transmission, the UE preempting/terminating the on-going channel access procedure with the new channel access procedure for the second transmission in a case where one of following conditions fulfills:
- an N value for determining a duration of time that the channel is sensed to be idle before transmission on the channel is randomly generated according to the second CAPC value, and a total required time for the new channel access procedure for the second transmission is shorter than a rest time of the ongoing channel access procedure;
- during a MCOT according to the first CAPC value or the second CAPC value, the UE can finish an expected future transmission to empty its buffer.

Otherwise, the ongoing channel access procedure is not preempted.

In a fourth example, the rules may further include: for a scheduled transmission preconfigured with a first CAPC value, the LTE selecting a second CAPC value according to a required COT for the transmission, wherein the second CAPC value is larger than the first CAPC value. That is, the UE may reduce the channel access priority level by itself according to the actual required COT regardless of the preconfigured channel access priority level.

For example, for configured scheduling (either Type 1 or Type 2), the UE may select a CPAC value p according to the required COT to transmit the buffered data. The chosen channel access priority level may be lower than the preconfigured/predetermined priority level for the service which triggers the PUSCH transmission. For one instance, for a service with a predetermined/preconfigured CAPC p=1 (i.e., meaning a high channel access priority level) in Table 1, the UE may perform channel access procedure according to CAPC p=2 (meaning a lower channel access priority level) if it needs longer time to transmit data.

In a fifth example, the rules may further include: in a case where a grant is configured for at least one service, the UE uses a channel access procedure associated with a CAPC value which is related to one of the at least one service for a transmission associated with the one service.

For example, for configured scheduling (either type 1 or Type 2), in a case where a configured grant is mainly configured for a specific service, however the configured grant also fulfills the Logical Channel Priority (LCP) restriction for other services of the UE, in this case, the grant may be also used to transmit the data of the other services besides the data of this specific service, the UE may apply the CAPC value associated with the specific service for the transmission, no matter whether other services have higher or lower channel access priority levels than that of the specific service.

The rules as described previously may be configured or predefined per UE or MAC entity or per cell/carrier/BWP/channel/subband.

Hereinafter, a structure of a UE according to an exemplary embodiment of the present disclosure will be described with reference to FIG. 2. FIG. 2 shows a block diagram of a UE 200 according to an exemplary embodiment of the present disclosure. The UE 200 in FIG. 2 may perform the method 100 for channel access adaptation as described previously with reference to FIG. 1. Accordingly, some detailed description on the UE 200 may refer to the corresponding description of the method 100 for channel access adaptation as previously discussed, and thus will be omitted here for simplicity.

As shown in FIG. 2, the UE 200 may include a monitoring unit 201 and an adaptation unit 203. The monitoring unit 201 may be configured to monitor channel occupancy or LBT/CCA statistics of a channel. The adaptation unit 203 may be configured to adapt a channel access procedure for the channel based on the monitored channel occupancy or LBT/CCA statistics.

In particular, the adaptation unit 203 adapts the channel access procedure for the channel based on the monitored channel occupancy or LBT/CCA statistics according to at least one of rules. The rules may be configured by a network node for the UE, or may be predefined by protocols for the UE.

As previously described, there are various rules configured or predefined for the UE.

The rules include: in a case where the monitored channel occupancy or LBT/CCA failure ratio characterizing the LBT/CCA statistics is below a predetermined threshold, or measurements of the monitored channel occupancy indicate that there is no other access device contends the channel with the UE, e.g., in a cell/carrier/BWP/channel/subband, if a first CAPC value for an on-going channel access procedure associated with a first transmission is not smaller than a second CAPC value for a new channel access procedure associated with a second transmission, the UE preempting/terminating the on-going channel access procedure with the new channel access procedure for the second transmission if the ongoing channel access procedure is clashing with the new channel access procedure.

Alternatively, the rules include: in a case where the monitored channel occupancy or LBT/CCA failure ratio characterizing the LBT/CCA statistics is not below a predetermined threshold, if a first CAPC value for an on-going channel access procedure associated with a first transmission is not smaller than a second CAPC value for a new channel access procedure associated with a second transmission, the UE using the on-going channel access procedure for the second transmission; and if the first CAPC value for the on-going channel access procedure associated with the first transmission is smaller than the second CAPC value for the new channel access procedure associated with the second transmission, the UE preempting/terminating the on-going channel access procedure with the new channel access procedure for the second transmission.

As a higher CAPC indicates a lower priority level of service while a lower CAPC indicates a higher priority level of service. According to the rules, the starvation of low priority service can be avoided.

The above transmissions, i.e., either the first transmission or the second transmission, may be control signaling transmission or data transmission.

The rules may further include, according to an exemplary embodiment: if the new channel access procedure is for control signaling transmission and the on-going channel access procedure is for data transmission, the UE preempting/terminating the ongoing channel access procedure for the data transmission with the new channel access procedure for the control signaling transmission.

The control signaling may include at least one of PUCCH, PRACH, SRS, and RRC signaling.

In a third example, the rules may further include:
no matter whether a first CAPC value for an on-going channel access procedure associated with a first transmission is smaller or larger than a second CAPC value for a new channel access procedure associated with a second transmission, the UE preempting/terminating the on-going channel access procedure with the new channel access procedure for the second transmission in a case where one of following conditions fulfills:
- an N value for determining a duration of time that the channel is sensed to be idle before transmission on the channel is randomly generated according to the second CAPC value, and a total required time for the new channel access procedure for the second transmission is shorter than a rest time of the ongoing channel access procedure;
- during a MCOT according to the first CAPC value or the second CAPC value, the UE can finish an expected future transmission to empty its buffer.

Otherwise, the ongoing channel access procedure is not preempted.

In a fourth example, the rules may further include:
for a scheduled transmission preconfigured with a first CAPC value, the UE selecting a second CAPC value according to a required COT for the transmission, wherein the second CAPC value is larger than the first CAPC value. That is, the UE may reduce the channel access priority level by itself according to the actual required COT regardless of the preconfigured channel access priority level.

For example, for configured scheduling (either Type 1 or Type 2), the UE may select a CPAC value p according to the required COT to transmit the buffered data. The chosen channel access priority level may be lower than the preconfigured/predetermined priority level for the service which triggers the PUSCH transmission. For one instance, for a service with a predetermined/preconfigured CAPC p=1 (i.e., meaning a high channel access priority level) in Table 1, the UE may perform channel access procedure according to CAPC p=2 (meaning a lower channel access priority level) if it needs longer time to transmit data.

In a fifth example, the rules may further include: in a case where a grant is configured for at least one service, the UE using a channel access procedure associated with a CAPC value which is related to one of the at least one service for a transmission associated with the one service.

For example, for configured scheduling (either type 1 or Type 2), in a case where a configured grant is mainly configured for a specific service, however the configured grant also fulfills the Logical Channel Priority (LCP) restriction for other services of the UE, in this case, the grant may be also used to transmit the data of the other services besides the data of this specific service, the UE may apply the CAPC value associated with the specific service for the transmission, no matter whether other services have higher or lower channel access priority levels than that of the specific service.

The rules as described previously may be configured or predefined per UE or MAC entity or per cell/carrier/BWP/channel/subband.

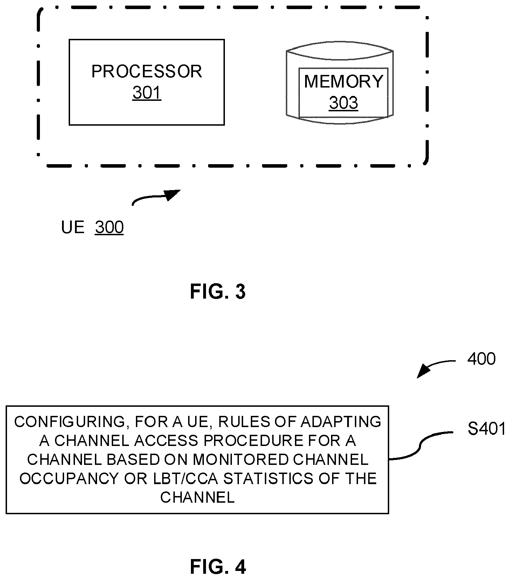

Hereinafter, a structure of a UE according to another exemplary embodiment of the present disclosure will be described with reference to FIG. 3. FIG. 3 shows a block diagram of a UE 300 according to an exemplary embodiment of the present disclosure. The UE 300 in FIG. 3 may perform the method 100 for channel access adaptation as described previously with reference to FIG. 1. Accordingly, some detailed description on the UE 300 may refer to the corresponding description of the method 100 for channel access adaptation as previously discussed, and thus will be omitted here for simplicity.

As shown in FIG. 3, the UE 300 may include at least one processor 301 and at least one memory 303. The at least one processor 301 includes e.g., any suitable CPU (Central Processing Unit), microcontroller, DSP (Digital Signal Processor), etc., capable of executing computer program instructions. The at least one memory 303 may be any combination of a RAM (Random Access Memory) and a ROM (Read Only Memory). The at least one processor memory 303 may also comprise persistent storage, which, for example, can be any single one or combination of magnetic memory, optical memory, or solid state memory or even remotely mounted memory.

The at least one memory 303 stores instructions executable by the at least one processor 301, whereby the UE 300 is operative to perform the actions, e.g., of the procedures as described earlier respectively in conjunction with FIG. 1.

In particular, in an embodiment of causing the UE 300 to perform the actions of the procedure as described earlier respectively in conjunction with FIG. 1, the instructions, when loaded from the at least one memory 303 and executed on the at least one processor 301, may cause the UE 300 to monitor, in step S101, channel occupancy or LBT/CCA statistics of a channel.

The instructions, when loaded from the at least one memory 303 and executed on the at least one processor 301, may further cause the UE 300 to adapt, in step S103, a channel access procedure for the channel based on the monitored channel occupancy or LBT/CCA statistics.

In particular, the adapting may be performed according to at least one of rules. The rules may be configured by a network node for the UE, or may be predefined by protocols for the UE.

As previously described, there are various rules configured or predefined for the UE.

The rules include: in a case where the monitored channel occupancy or LBT/CCA failure ratio characterizing the LBT/CCA statistics is below a predetermined threshold, or measurements of the monitored channel occupancy indicate that there is no other access device contends the channel with the UE, e.g., in a cell/carrier/BWP/channel/subband, if a first CAPC value for an on-going channel access procedure associated with a first transmission is not smaller than a second CAPC value for a new channel access procedure associated with a second transmission, the UE preempting/terminating the on-going channel access procedure with the new channel access procedure for the second transmission if the ongoing channel access procedure is clashing with the new channel access procedure.

Alternatively, the rules include: in a case where the monitored channel occupancy or LBT/CCA failure ratio characterizing the LBT/CCA statistics is not below a predetermined threshold, if a first CAPC value for an on-going channel access procedure associated with a first transmission is not smaller than a second CAPC value for a new channel access procedure associated with a second transmission, the UE using the on-going channel access procedure for the second transmission; and if the first CAPC value for the on-going channel access procedure associated with the first transmission is smaller than the second CAPC value for the new channel access procedure associated with the second transmission, the UE preempting/terminating the on-going channel access procedure with the new channel access procedure for the second transmission.

As a higher CAPC indicates a lower priority level of service while a lower CAPC indicates a higher priority level of service. According to the rules, the starvation of low priority service can be avoided.

The above transmissions, i.e., either the first transmission or the second transmission, may be control signaling transmission or data transmission.

The rules may further include, according to an exemplary embodiment: if the new channel access procedure is for control signaling transmission and the on-going channel access procedure is for data transmission, the UE preempting/terminating the ongoing channel access procedure for the data transmission with the new channel access procedure for the control signaling transmission.

The control signaling may include at least one of PUCCH, PRACH, SRS, and RRC signaling.

In a third example, the rules may further include: no matter whether a first CAPC value for an on-going channel access procedure associated with a first transmission is smaller or larger than a second CAPC value for a new channel access procedure associated with a second transmission, the UE preempting/terminating the on-going channel access procedure with the new channel access procedure for the second transmission in a case where one of following conditions fulfills:
- an N value for determining a duration of time that the channel is sensed to be idle before transmission on the channel is randomly generated according to the second CAPC value, and a total required time for the new channel access procedure for the second transmission is shorter than a rest time of the ongoing channel access procedure;
- during a MCOT according to the first CAPC value or the second CAPC value, the UE can finish an expected future transmission to empty its buffer.

Otherwise, the ongoing channel access procedure is not preempted.

In a fourth example, the rules may further include: for a scheduled transmission preconfigured with a first CAPC value, the UE selecting a second CAPC value according to a required COT for the transmission, wherein the second CAPC value is larger than the first CAPC value. That is, the UE may reduce the channel access priority level by itself according to the actual required COT regardless of the preconfigured channel access priority level.

For example, for configured scheduling (either Type 1 or Type 2), the UE may select a CPAC value p according to the required COT to transmit the buffered data. The chosen channel access priority level may be lower than the preconfigured/predetermined priority level for the service which triggers the PUSCH transmission. For one instance, for a service with a predetermined/preconfigured CAPC p=1 (i.e., meaning a high channel access priority level) in Table 1, the UE may perform channel access procedure according to CAPC p=2 (meaning a lower channel access priority level) if it needs longer time to transmit data.

In a fifth example, the rules may further include: in a case where a grant is configured for at least one service, the UE using a channel access procedure associated with a CAPC value which is related to one of the at least one service for a transmission associated with the one service.

For example, for configured scheduling (either type 1 or Type 2), in a case where a configured grant is mainly configured for a specific service, however the configured grant also fulfills the Logical Channel Priority (LCP) restriction for other services of the UE, in this case, the grant may be also used to transmit the data of the other services besides the data of this specific service, the UE may apply the CAPC value associated with the specific service for the transmission, no matter whether other services have higher or lower channel access priority levels than that of the specific service.

The rules as described previously may be configured or predefined per UE or MAC entity or per cell/carrier/BWP/channel/subband.

Hereinafter, a method at a network node for configuring a channel access adaptation rule at a network node according to an exemplary embodiment of the present disclosure will be described with reference to FIG. 4.

FIG. 4 is a flowchart illustrating a method 400 of configuring a channel access adaptation rule according to an exemplary embodiment of the present disclosure. The method 400 may be performed at a network node. As shown in FIG. 4, the method 400 may include step S401. In step S401, the network node may configure, for a UE, rules of adapting a channel access procedure for a channel based on monitored channel occupancy or LBT/ CCA statistics of the channel. The rules may be applied via either UE specific signaling or cell specific signaling. The cell specific signaling may be system message or cell specific PDCCH order. The UE specific signaling may be RRC signaling, MAC CE or PDCCH order.

There are various rules configured or predefined for the UE.

The rules include: in a case where the monitored channel occupancy or LBT/CCA failure ratio characterizing the LBT/CCA statistics is below a predetermined threshold, or measurements of the monitored channel occupancy indicate that there is no other access device contends the channel with the UE, e.g., in a cell/carrier/BWP/channel/subband, if a first CAPC value for an on-going channel access procedure associated with a first transmission is not smaller than a second CAPC value for a new channel access procedure associated with a second transmission, the UE preempting/terminating the on-going channel access procedure with the new channel access procedure for the second transmission if the ongoing channel access procedure is clashing with the new channel access procedure.

Alternatively, the rules include: in a case where the monitored channel occupancy or LBT/CCA failure ratio characterizing the LBT/CCA statistics is not below a predetermined threshold, if a first CAPC value for an on-going channel access procedure associated with a first transmission is not smaller than a second CAPC value for a new channel access procedure associated with a second transmission, the UE using the on-going channel access procedure for the second transmission; and if the first CAPC value for the on-going channel access procedure associated with the first transmission is smaller than the second CAPC value for the new channel access procedure associated with the second transmission, the UE preempting/terminating the on-going channel access procedure with the new channel access procedure for the second transmission.

As a higher CAPC indicates a lower priority level of service while a lower CAPC indicates a higher priority level of service. According to the rules, the starvation of low priority service can be avoided.

The above transmissions, i.e., either the first transmission or the second transmission, may be control signaling transmission or data transmission.

The rules may further include, according to an exemplary embodiment: if the new channel access procedure is for control signaling transmission and the on-going channel access procedure is for data transmission, the UE preempting/terminating the ongoing channel access procedure for the data transmission with the new channel access procedure for the control signaling transmission.

The control signaling may include at least one of PUCCH, PRACH, SRS, and RRC signaling.

In a third example, the rules may further include:
no matter whether a first CAPC value for an on-going channel access procedure associated with a first transmission is smaller or larger than a second CAPC value for a new channel access procedure associated with a second transmission, the UE preempting/terminating the on-going channel access procedure with the new channel access procedure for the second transmission in a case where one of following conditions fulfills:
- an N value for determining a duration of time that the channel is sensed to be idle before transmission on the channel is randomly generated according to the second CAPC value, and a total required time for the new channel access procedure for the second transmission is shorter than a rest time of the ongoing channel access procedure;
- during a MCOT according to the first CAPC value or the second CAPC value, the UE can finish an expected future transmission to empty its buffer.

Otherwise, the ongoing channel access procedure is not preempted.

In a fourth example, the rules may further include:
for a scheduled transmission preconfigured with a first CAPC value, the UE selecting a second CAPC value according to a required COT for the transmission, wherein the second CAPC value is larger than the first CAPC value. That is, the UE may reduce the channel access priority level by itself according to the actual required COT regardless of the preconfigured channel access priority level.

For example, for configured scheduling (either Type 1 or Type 2), the UE may select a CPAC value p according to the required COT to transmit the buffered data. The chosen channel access priority level may be lower than the preconfigured/predetermined priority level for the service which triggers the PUSCH transmission. For one instance, for a service with a predetermined/preconfigured CAPC p=1 (i.e., meaning a high channel access priority level) in Table 1, the UE may perform channel access procedure according to CAPC p=2 (meaning a lower channel access priority level) if it needs longer time to transmit data.

In a fifth example, the rules may further include: in a case where a grant is configured for at least one service, the UE using a channel access procedure associated with a CAPC value which is related to one of the at least one service for a transmission associated with the one service.

For example, for configured scheduling (either type 1 or Type 2), in a case where a configured grant is mainly configured for a specific service, however the configured grant also fulfills the Logical Channel Priority (LCP) restriction for other services of the UE, in this case, the grant may be also used to transmit the data of the other services besides the data of this specific service, the UE may apply the CAPC value associated with the specific service for the transmission, no matter whether other services have higher or lower channel access priority levels than that of the specific service.

The rules as described previously may be configured or predefined per UE or MAC entity or per cell/carrier/BWP/channel/subband.

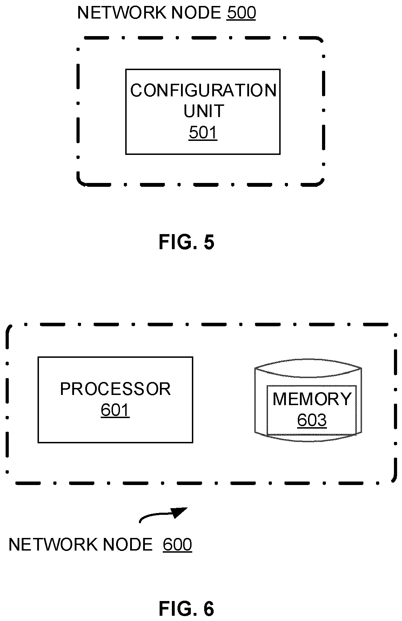

Hereinafter, a structure of a network node according to an exemplary embodiment of the present disclosure will be described with reference to FIG. 5. FIG. 5 shows a block diagram of a network node 500 according to an exemplary embodiment of the present disclosure. The network node 500 in FIG. 5 may perform the method 400 for of configuring a channel access adaptation rule as described previously with reference to FIG. 4. Accordingly, some detailed description on the network node 500 may refer to the corresponding description of the method 400 for configuring a channel access adaptation rule as previously discussed, and thus will be omitted here for simplicity.

As shown in FIG. 5, the network node 500 includes a configuration unit 501. The configuration unit 501 may configure, for a UE, rules of adapting a channel access procedure for a channel based on monitored channel occupancy or LBT/ CCA statistics of the channel. The rules may be applied via either UE specific signaling or cell specific signaling. The cell specific signaling may be system message or cell specific PDCCH order. The UE specific signaling may be RRC signaling, MAC CE or PDCCH order.

There are various rules configured or predefined for the UE.

The rules include: in a case where the monitored channel occupancy or LBT/CCA failure ratio characterizing the LBT/CCA statistics is below a predetermined threshold, or measurements of the monitored channel occupancy indicate that there is no other access device contends the channel with the UE, e.g., in a cell/carrier/BWP/channel/subband, if a first CAPC value for an on-going channel access procedure associated with a first transmission is not smaller than a second CAPC value for a new channel access procedure associated with a second transmission, the UE preempting/terminating the on-going channel access procedure with the new channel access procedure for the second transmission if the ongoing channel access procedure is clashing with the new channel access procedure.

Alternatively, the rules include:
in a case where the monitored channel occupancy or LBT/CCA failure ratio characterizing the LBT/CCA statistics is not below a predetermined threshold, if a first CAPC value for an on-going channel access procedure associated with a first transmission is not smaller than a second CAPC value for a new channel access procedure associated with a second transmission, the UE using the on-going channel access procedure for the second transmission; and if the first CAPC value for the on-going channel access procedure associated with the first transmission is smaller than the second CAPC value for the new channel access procedure associated with the second transmission, the UE preempting/terminating the on-going channel access procedure with the new channel access procedure for the second transmission.

As a higher CAPC indicates a lower priority level of service while a lower CAPC indicates a higher priority level of service. According to the rules, the starvation of low priority service can be avoided.

The above transmissions, i.e., either the first transmission or the second transmission, may be control signaling transmission or data transmission.

The rules may further include, according to an exemplary embodiment: if the new channel access procedure is for control signaling transmission and the on-going channel access procedure is for data transmission, the UE preempting/terminating the ongoing channel access procedure for the data transmission with the new channel access procedure for the control signaling transmission.

The control signaling may include at least one of PUCCH, PRACH, SRS, and RRC signaling.

In a third example, the rules may further include: no matter whether a first CAPC value for an on-going channel access procedure associated with a first transmission is smaller or larger than a second CAPC value for a new channel access procedure associated with a second transmission, the UE preempting/terminating the on-going channel access procedure with the new channel access procedure for the second transmission in a case where one of following conditions fulfills:
- an N value for determining a duration of time that the channel is sensed to be idle before transmission on the channel is randomly generated according to the second CAPC value, and a total required time for the new channel access procedure for the second transmission is shorter than a rest time of the ongoing channel access procedure;
- during a MCOT according to the first CAPC value or the second CAPC value, the UE can finish an expected future transmission to empty its buffer.

Otherwise, the ongoing channel access procedure is not preempted.

In a fourth example, the rules may further include: for a scheduled transmission preconfigured with a first CAPC value, the UE selecting a second CAPC value according to a required COT for the transmission, wherein the second CAPC value is larger than the first CAPC value. That is, the UE may reduce the channel access priority level by itself according to the actual required COT regardless of the preconfigured channel access priority level.

For example, for configured scheduling (either Type 1 or Type 2), the UE may select a CPAC value p according to the required COT to transmit the buffered data. The chosen channel access priority level may be lower than the preconfigured/predetermined priority level for the service which triggers the PUSCH transmission. For one instance, for a service with a predetermined/preconfigured CAPC p=1 (i.e., meaning a high channel access priority level) in Table 1, the UE may perform channel access procedure according to CAPC p=2 (meaning a lower channel access priority level) if it needs longer time to transmit data.

In a fifth example, the rules may further include: in a case where a grant is configured for at least one service, the UE using a channel access procedure associated with a CAPC value which is related to one of the at least one service for a transmission associated with the one service.

For example, for configured scheduling (either type 1 or Type 2), in a case where a configured grant is mainly configured for a specific service, however the configured grant also fulfills the Logical Channel Priority (LCP) restriction for other services of the UE, in this case, the grant may be also used to transmit the data of the other services besides the data of this specific service, the UE may apply the CAPC value associated with the specific service for the transmission, no matter whether other services have higher or lower channel access priority levels than that of the specific service.

The rules as described previously may be configured or predefined per UE or MAC entity or per cell/carrier/BWP/channel/subband.

Hereinafter, a structure of a network node according to an exemplary embodiment of the present disclosure will be described with reference to FIG. 6. FIG. 6 shows a block diagram of a network node 600 according to an exemplary embodiment of the present disclosure. The network node 600 in FIG. 6 may perform the method 400 for configuring a channel access adaptation rule as described previously with reference to FIG. 4. Accordingly, some detailed description on the network node 600 may refer to the corresponding description of the method 400 for configuring a channel access adaptation rule as previously discussed, and thus will be omitted here for simplicity.

As shown in FIG. 6, the network node 600 includes at least one processor 601 and at least one memory 603. The at least one processor 601 includes e.g., any suitable CPU (Central Processing Unit), microcontroller, DSP (Digital Signal Processor), etc., capable of executing computer program instructions. The at least one memory 603 may be any combination of a RAM (Random Access Memory) and a ROM (Read Only Memory). The at least one processor memory 603 may also comprise persistent storage, which, for example, can be any single one or combination of magnetic memory, optical memory, or solid state memory or even remotely mounted memory.

The at least one memory 603 stores instructions executable by the at least one processor 601, whereby the network node 600 is operative to perform the actions, e.g., of the procedures as described earlier respectively in conjunction with FIG. 4.

In particular, in an embodiment of causing the network node 600 to perform the actions of the procedure as described earlier respectively in conjunction with FIG. 4, the instructions, when loaded from the at least one memory 603 and executed on the at least one processor 601, cause the network node 600 to configure, for a UE, rules of adapting a channel access procedure for a channel based on monitored channel occupancy or LBT/ CCA statistics of the channel in step S401.

The rules may be applied via either UE specific signaling or cell specific signaling. The cell specific signaling may be system message or cell specific PDCCH order. The UE specific signaling may be RRC signaling, MAC CE or PDCCH order.

There are various rules configured or predefined for the UE.

The rules include: in a case where the monitored channel occupancy or LBT/CCA failure ratio characterizing the LBT/CCA statistics is below a predetermined threshold, or measurements of the monitored channel occupancy indicate that there is no other access device contends the channel with the UE, e.g., in a cell/carrier/BWP/channel/subband, if a first CAPC value for an on-going channel access procedure associated with a first transmission is not smaller than a second CAPC value for a new channel access procedure associated with a second transmission, the UE preempting/terminating the on-going channel access procedure with the new channel access procedure for the second transmission if the ongoing channel access procedure is clashing with the new channel access procedure.

Alternatively, the rules include: in a case where the monitored channel occupancy or LBT/CCA failure ratio characterizing the LBT/CCA statistics is not below a predetermined threshold, if a first CAPC value for an on-going channel access procedure associated with a first transmission is not smaller than a second CAPC value for a new channel access procedure associated with a second transmission, the UE using the on-going channel access procedure for the second transmission; and if the first CAPC value for the on-going channel access procedure associated with the first transmission is smaller than the second CAPC value for the new channel access procedure associated with the second transmission, the UE preempting/terminating the on-going channel access procedure with the new channel access procedure for the second transmission.

As a higher CAPC indicates a lower priority level of service while a lower CAPC indicates a higher priority level of service. According to the rules, the starvation of low priority service can be avoided.

The above transmissions, i.e., either the first transmission or the second transmission, may be control signaling transmission or data transmission.

The rules may further include, according to an exemplary embodiment: if the new channel access procedure is for control signaling transmission and the on-going channel access procedure is for data transmission, the UE preempting/terminating the ongoing channel access procedure for the data transmission with the new channel access procedure for the control signaling transmission.

The control signaling may include at least one of PUCCH, PRACH, SRS, and RRC signaling.

In a third example, the rules may further include: no matter whether a first CAPC value for an on-going channel access procedure associated with a first transmission is smaller or larger than a second CAPC value for a new channel access procedure associated with a second transmission, the UE preempting/terminating the on-going channel access procedure with the new channel access procedure for the second transmission in a case where one of following conditions fulfills:
- an N value for determining a duration of time that the channel is sensed to be idle before transmission on the channel is randomly generated according to the second CAPC value, and a total required time for the new channel access procedure for the second transmission is shorter than a rest time of the ongoing channel access procedure;
- during a MCOT according to the first CAPC value or the second CAPC value, the UE can finish an expected future transmission to empty its buffer.

Otherwise, the ongoing channel access procedure is not preempted.

In a fourth example, the rules may further include: for a scheduled transmission preconfigured with a first CAPC value, the UE selecting a second CAPC value according to a required COT for the transmission, wherein the second CAPC value is larger than the first CAPC value. That is, the UE may reduce the channel access priority level by itself according to the actual required COT regardless of the preconfigured channel access priority level.

For example, for configured scheduling (either Type 1 or Type 2), the UE may select a CPAC value p according to the required COT to transmit the buffered data. The chosen channel access priority level may be lower than the preconfigured/predetermined priority level for the service which triggers the PUSCH transmission. For one instance, for a service with a predetermined/preconfigured CAPC p=1 (i.e., meaning a high channel access priority level) in Table 1, the UE may perform channel access procedure according to CAPC p=2 (meaning a lower channel access priority level) if it needs longer time to transmit data.

In a fifth example, the rules may further include: in a case where a grant is configured for at least one service, the UE using a channel access procedure associated with a CAPC value which is related to one of the at least one service for a transmission associated with the one service.

For example, for configured scheduling (either type 1 or Type 2), in a case where a configured grant is mainly configured for a specific service, however the configured grant also fulfills the Logical Channel Priority (LCP) restriction for other services of the UE, in this case, the grant may be also used to transmit the data of the other services besides the data of this specific service, the UE may apply the CAPC value associated with the specific service for the transmission, no matter whether other services have higher or lower channel access priority levels than that of the specific service.

The rules as described previously may be configured or predefined per UE or MAC entity or per cell/carrier/BWP/channel/subband.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the at least one processor 401 causes the UE 400 to perform the actions, e.g., of the procedure described earlier in conjunction with FIG. 1; or code/computer readable instructions, which when executed by the at least one processor 601 causes the network node 600 to perform the actions, e.g., of the procedures described earlier respectively in conjunction with FIG. 4.

The computer program product may be configured as a computer program code structured in computer program modules. The computer program modules could essentially perform the actions of the flow illustrated in FIG. 1 or 4.

The processor may be a single CPU (Central processing unit), but could also comprise two or more processing units. For example, the processor may include general purpose microprocessors; instruction set processors and/or related chips sets and/or special purpose microprocessors such as Application Specific Integrated Circuit (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories.

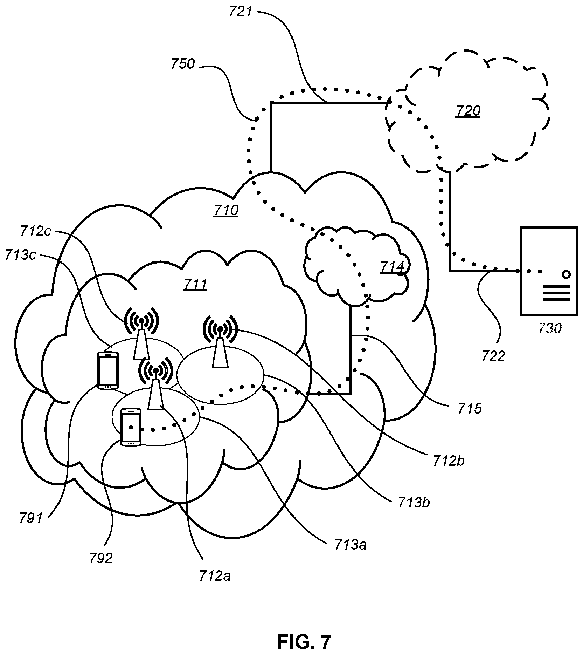

With reference to FIG. 7, in accordance with an embodiment, a communication system includes a telecommunication network 710, such as a 3GPP-type cellular network, which comprises an access network 711, such as a radio access network, and a core network 714. The access network 711 comprises a plurality of base stations 712a, 712b, 712c, such as NBs, eNBs, gNBs or other types of wireless access points, each defining a corresponding coverage area 713a, 713b, 713c. Each base station 712a, 712b, 712c is connectable to the core network 714 over a wired or wireless connection 715. A first user equipment (UE) 791 located in coverage area 713c is configured to wirelessly connect to, or be paged by, the corresponding base station 712c. A second UE 792 in coverage area 713a is wirelessly connectable to the corresponding base station 712a. While a plurality of UEs 791, 792 are illustrated in this example, the disclosed embodiments are equally applicable to a situation where a sole UE is in the coverage area or where a sole UE is connecting to the corresponding base station 712.

The telecommunication network 710 is itself connected to a host computer 730, which may be embodied in the hardware and/or software of a standalone server, a cloud-implemented server, a distributed server or as processing resources in a server farm. The host computer 730 may be under the ownership or control of a service provider, or may be operated by the service provider or on behalf of the service provider. The connections 721, 722 between the telecommunication network 710 and the host computer 730 may extend directly from the core network 714 to the host computer 730 or may go via an optional intermediate network 720. The intermediate network 720 may be one of, or a combination of more than one of, a public, private or hosted network; the intermediate network 720, if any, may be a backbone network or the Internet; in particular, the intermediate network 720 may comprise two or more sub-networks (not shown).

The communication system of FIG. 7 as a whole enables connectivity between one of the connected UEs 791, 792 and the host computer 730. The connectivity may be described as an over-the-top (OTT) connection 750. The host computer 730 and the connected UEs 791, 792 are configured to communicate data and/or signaling via the OTT connection 750, using the access network 711, the core network 714, any intermediate network 720 and possible further infrastructure (not shown) as intermediaries. The OTT connection 750 may be transparent in the sense that the participating communication devices through which the OTT connection 750 passes are unaware of routing of uplink and downlink communications. For example, a base station 712 may not or need not be informed about the past routing of an incoming downlink communication with data originating from a host computer 730 to be forwarded (e.g., handed over) to a connected UE 791. Similarly, the base station 712 need not be aware of the future routing of an outgoing uplink communication originating from the UE 791 towards the host computer 730.

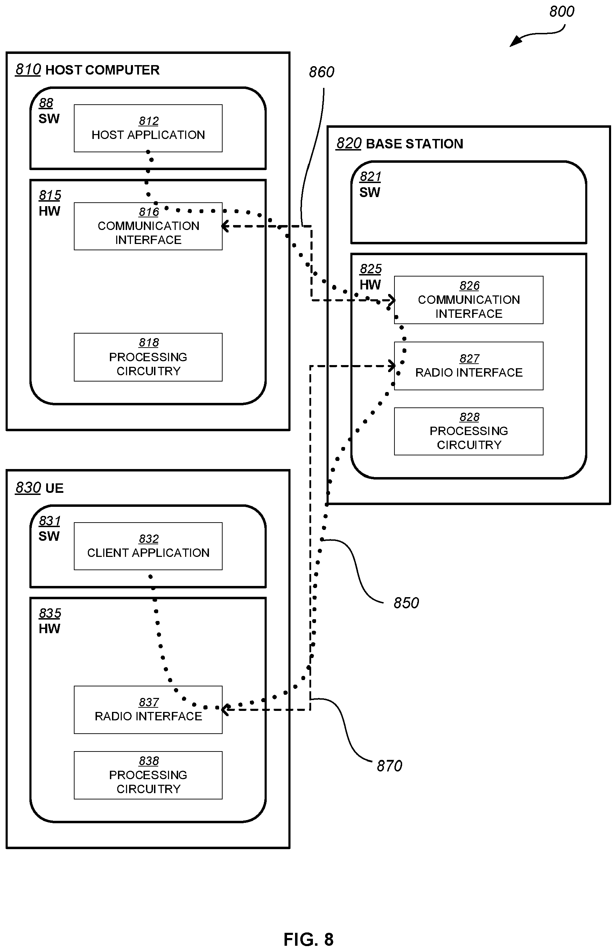

Example implementations, in accordance with an embodiment, of the UE, base station and host computer discussed in the preceding paragraphs will now be described with reference to FIG. 8. In a communication system 800, a host computer 810 comprises hardware 815 including a communication interface 816 configured to set up and maintain a wired or wireless connection with an interface of a different communication device of the communication system 800. The host computer 810 further comprises processing circuitry 818, which may have storage and/or processing capabilities. In particular, the processing circuitry 818 may comprise one or more programmable processors, application-specific integrated circuits, field programmable gate arrays or combinations of these (not shown) adapted to execute instructions. The host computer 810 further comprises software 88, which is stored in or accessible by the host computer 810 and executable by the processing circuitry 818. The software 88 includes a host application 812. The host application 812 may be operable to provide a service to a remote user, such as a UE 830 connecting via an OTT connection 850 terminating at the UE 830 and the host computer 810. In providing the service to the remote user, the host application 812 may provide user data which is transmitted using the OTT connection 850.

The communication system 800 further includes a base station 820 provided in a telecommunication system and comprising hardware 825 enabling it to communicate with the host computer 810 and with the UE 830. The hardware 825 may include a communication interface 826 for setting up and maintaining a wired or wireless connection with an interface of a different communication device of the communication system 800, as well as a radio interface 827 for setting up and maintaining at least a wireless connection 870 with a UE 830 located in a coverage area (not shown in FIG. 8) served by the base station 820. The communication interface 826 may be configured to facilitate a connection 860 to the host computer 810. The connection 860 may be direct or it may pass through a core network (not shown in FIG. 8) of the telecommunication system and/or through one or more intermediate networks outside the telecommunication system. In the embodiment shown, the hardware 825 of the base station 820 further includes processing circuitry 828, which may comprise one or more programmable processors, application-specific integrated circuits, field programmable gate arrays or combinations of these (not shown) adapted to execute instructions. The base station 820 further has software 821 stored internally or accessible via an external connection.

The communication system 800 further includes the UE 830 already referred to. Its hardware 835 may include a radio interface 837 configured to set up and maintain a wireless connection 870 with a base station serving a coverage area in which the UE 830 is currently located. The hardware 835 of the UE 830 further includes processing circuitry 838, which may comprise one or more programmable processors, application-specific integrated circuits, field programmable gate arrays or combinations of these (not shown) adapted to execute instructions. The UE 830 further comprises software 831, which is stored in or accessible by the UE 830 and executable by the processing circuitry 838. The software 831 includes a client application 832. The client application 832 may be operable to provide a service to a human or non-human user via the UE 830, with the support of the host computer 810. In the host computer 810, an executing host application 812 may communicate with the executing client application 832 via the OTT connection 850 terminating at the UE 830 and the host computer 810. In providing the service to the user, the client application 832 may receive request data from the host application 812 and provide user data in response to the request data. The OTT connection 850 may transfer both the request data and the user data. The client application 832 may interact with the user to generate the user data that it provides.

It is noted that the host computer 810, base station 820 and UE 830 illustrated in FIG. 8 may be identical to the host computer 830, one of the base stations 712a, 712b, 712c and one of the UEs 791, 792 of FIG. 7, respectively. This is to say, the inner workings of these entities may be as shown in FIG. 8 and independently, the surrounding network topology may be that of FIG. 7.

In FIG. 8, the OTT connection 850 has been drawn abstractly to illustrate the communication between the host computer 810 and the use equipment 830 via the base station 820, without explicit reference to any intermediary devices and the precise routing of messages via these devices. Network infrastructure may determine the routing, which it may be configured to hide from the UE 830 or from the service provider operating the host computer 810, or both. While the OTT connection 850 is active, the network infrastructure may further take decisions by which it dynamically changes the routing (e.g., on the basis of load balancing consideration or reconfiguration of the network).

The wireless connection 870 between the UE 830 and the base station 820 is in accordance with the teachings of the embodiments described throughout this disclosure. One or more of the various embodiments improve the performance of OTT services provided to the UE 830 using the OTT connection 850, in which the wireless connection 870 forms the last segment. More precisely, the teachings of these embodiments may reduce PDCCH detection time and complexity and thereby provide benefits such as reduced user waiting time and reduced power consumption at the UE.

A measurement procedure may be provided for the purpose of monitoring data rate, latency and other factors on which the one or more embodiments improve. There may further be an optional network functionality for reconfiguring the OTT connection 850 between the host computer 810 and UE 830, in response to variations in the measurement results. The measurement procedure and/or the network functionality for reconfiguring the OTT connection 850 may be implemented in the software 88 of the host computer 810 or in the software 831 of the UE 830, or both. In embodiments, sensors (not shown) may be deployed in or in association with communication devices through which the OTT connection 850 passes; the sensors may participate in the measurement procedure by supplying values of the monitored quantities exemplified above, or supplying values of other physical quantities from which software 88, 831 may compute or estimate the monitored quantities. The reconfiguring of the OTT connection 850 may include message format, retransmission settings, preferred routing etc.; the reconfiguring need not affect the base station 820, and it may be unknown or imperceptible to the base station 820. Such procedures and functionalities may be known and practiced in the art. In certain embodiments, measurements may involve proprietary UE signaling facilitating the host computer's 810 measurements of throughput, propagation times, latency and the like. The measurements may be implemented in that the software 88, 831 causes messages to be transmitted, in particular empty or 'dummy' messages, using the OTT connection 850 while it monitors propagation times, errors etc.

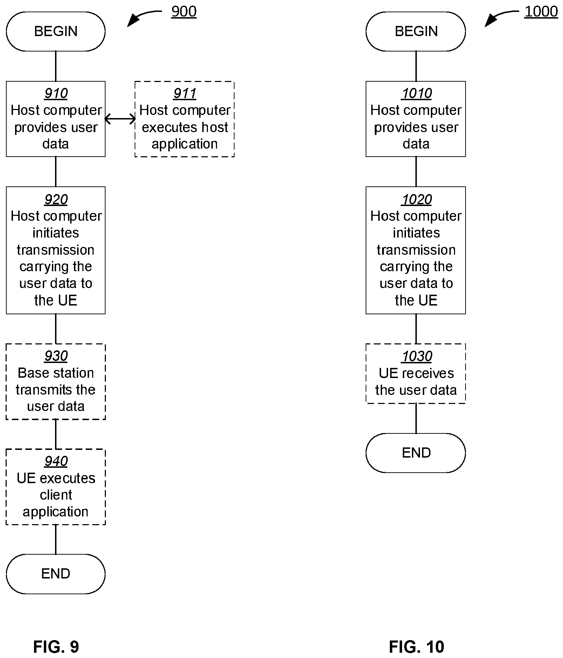

FIG. 9 is a flowchart illustrating a method implemented in a communication system, in accordance with one embodiment. The communication system includes a host computer, a base station and a UE which may be those described with reference to FIGS. 7 and 8. For simplicity of the present disclosure, only drawing references to FIG. 9 will be included in this section. In a first step 910 of the method, the host computer provides user data. In an optional substep 911 of the first step 910, the host computer provides the user data by executing a host application. In a second step 920, the host computer initiates a transmission carrying the user data to the UE. In an optional third step 930, the base station transmits to the UE the user data which was carried in the transmission that the host computer initiated, in accordance with the teachings of the embodiments described throughout this disclosure. In an optional fourth step 940, the UE executes a client application associated with the host application executed by the host computer.

FIG. 10 is a flowchart illustrating a method implemented in a communication system, in accordance with one embodiment. The communication system includes a host computer, a base station and a UE which may be those described with reference to FIGS. 7 and 8. For simplicity of the present disclosure, only drawing references to FIG. 10 will be included in this section. In a first step 1010 of the method, the host computer provides user data. In an optional substep (not shown) the host computer provides the user data by executing a host application. In a second step 1020, the host computer initiates a transmission carrying the user data to the UE. The transmission may pass via the base station, in accordance with the teachings of the embodiments described throughout this disclosure. In an optional third step 1030, the UE receives the user data carried in the transmission.

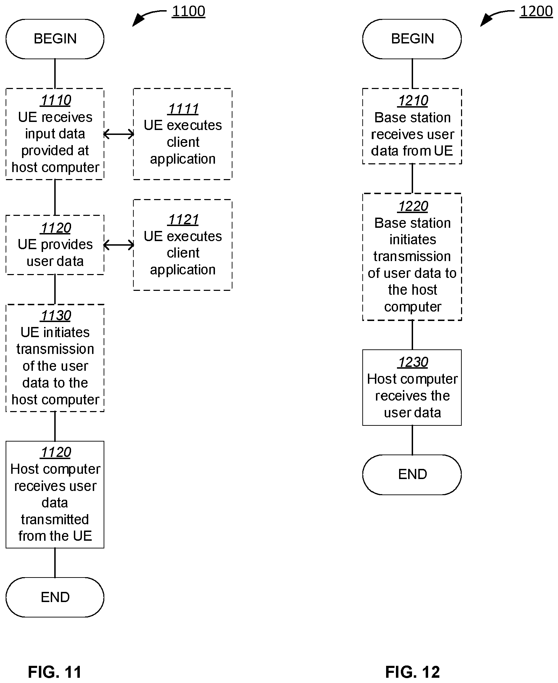

FIG. 11 is a flowchart illustrating a method implemented in a communication system, in accordance with one embodiment. The communication system includes a host computer, a base station and a UE which may be those described with reference to FIGS. 7 and 8. For simplicity of the present disclosure, only drawing references to FIG. 11 will be included in this section. In an optional first step 1110 of the method, the UE receives input data provided by the host computer. Additionally or alternatively, in an optional second step 1120, the UE provides user data. In an optional substep 1121 of the second step 1120, the UE provides the user data by executing a client application. In a further optional substep 1111 of the first step 1110, the UE executes a client application which provides the user data in reaction to the received input data provided by the host computer. In providing the user data, the executed client application may further consider user input received from the user. Regardless of the specific manner in which the user data was provided, the UE initiates, in an optional third substep 1130, transmission of the user data to the host computer. In a fourth step 1140 of the method, the host computer receives the user data transmitted from the UE, in accordance with the teachings of the embodiments described throughout this disclosure.

FIG. 12 is a flowchart illustrating a method implemented in a communication system, in accordance with one embodiment. The communication system includes a host computer, a base station and a UE which may be those described with reference to FIGS. 7 and 8. For simplicity of the present disclosure, only drawing references to FIG. 12 will be included in this section. In an optional first step 1210 of the method, in accordance with the teachings of the embodiments described throughout this disclosure, the base station receives user data from the UE. In an optional second step 1220, the base station initiates transmission of the received user data to the host computer. In a third step 1230, the host computer receives the user data carried in the transmission initiated by the base station.

The present disclosure has been described above with reference to embodiments thereof. It should be understood that various modifications, alternations and additions can be made by those skilled in the art without departing from the scope of the present disclosure. Therefore, the scope of the present disclosure is not limited to the above particular embodiments but only defined by the claims as attached.

## Claims

1. A method (100) at a user equipment, LTE, comprising:
monitoring (S101) channel occupancy or Listen-Before-Talk ,LBT/Clear Channel Assessment ,CCA, statistics of a channel; and
adapting (S103) a channel access procedure for the channel based on the monitored channel occupancy or LBT/CCA statistics, wherein
said adapting the channel access procedure for the channel based on the monitored channel occupancy or LBT statistics is performed according to rules configured by a network node for the UE or predefined for the UE, and **characterised in that** the rules comprise one of
(i) in a case where
the monitored channel occupancy or LBT/CCA failure ratio characterizing the LBT/CCA statistics is below a predetermined threshold, or measurements of the monitored channel occupancy indicate that there is no other access device contends the channel with the UE, and
if a first channel access priority level for an on-going channel access procedure associated with a first transmission is not higher than a second channel access priority level for a new channel access procedure associated with a second transmission, the UE preempting the on-going channel access procedure with the new channel access procedure for the second transmission;
(ii) in a case where the monitored channel occupancy or LBT/CCA failure ratio characterizing the LBT/CCA statistics is not below a predetermined threshold,
if a first channel access priority level for an on-going channel access procedure associated with a first transmission is not higher than a second channel access priority level for a new channel access procedure associated with a second transmission, the LTE using the on-going channel access procedure for the second transmission, and
if the first channel access priority level for the on-going channel access procedure associated with the first transmission is higher than the second channel access priority level for the new channel access procedure associated with the second transmission, the UE preempting the on-going channel access procedure with the new channel access procedure for the second transmission.

2. The method (100) of claim 1, wherein each of the first transmission and the second transmission is control signaling transmission or data transmission.

3. The method (100) of claim 1, wherein the rules further comprise:
if the new channel access procedure is for control signaling transmission and the on-going channel access procedure is for data transmission, the UE preempting the ongoing channel access procedure for the data transmission with the new channel access procedure for the control signaling transmission.

4. The method (100) of claim 3, wherein the control signaling comprises at least one of Physical Uplink Control Channel, PUCCH, Physical Random Access Channel, PRACH, Sounding Reference Signal, SRS, and Radio Resource Control, RRC, signaling.

5. The method (100) of claim 1, wherein the rules further comprise:
no matter whether a first channel access priority level for an on-going channel access procedure associated with a first transmission is higher or lower than a second channel access priority level for a new channel access procedure associated with a second transmission, the UE preempting the on-going channel access procedure with the new channel access procedure for the second transmission in a case where one of following conditions fulfills:
• an N value for determining a duration of time that the channel is sensed to be idle before transmission on the channel is randomly generated according to the second channel access priority level, and a total required time for the new channel access procedure for the second transmission is shorter than a rest time of the on-going channel access procedure;
• during a Maximum Channel Occupation Time ,MCOT, according to the first channel access priority level or the second channel access priority level, the UE can finish an expected future transmission to empty its buffer.

6. The method (100) of claim 1, wherein the rules further comprise:
for a scheduled transmission preconfigured with a first channel access priority level, the UE selecting a second channel access priority level according to a required Channel Occupation Time ,COT, for the transmission, wherein the second channel access priority level is lower than the first channel access priority level.

7. The method (100) of claim 1, wherein the rules further comprise:
in a case where a grant is configured for at least one service, the UE using a channel access procedure associated with a channel access priority level which is related to one of the at least one service for a transmission associated with the one service.

8. The method (100) of any of claims 1 to 7, wherein the rules configured by the network node is applied to the UE via UE specific signaling or cell specific signaling.

9. The method (100) of any of claims 1 to 8, wherein the rules are made per one of UE, Media Access Control, MAC, entity, cell, carrier, Bandwidth Part ,BWP, channel, subband.

10. A user equipment, UE, (300), comprising:
at least one processor (301), and
at least one memory (303), storing instructions which, when executed on the at least one processor (301), cause the at least one processor (301) to:
monitor channel occupancy or Listen-Before-Talk ,LBT/Clear Channel Assessment ,CCA, statistics of a channel; and
adapt a channel access procedure for the channel based on the monitored channel occupancy or LBT/CCA statistics, wherein causing the at least one processor (301) to adapt the channel access procedure for the channel based on the monitored channel occupancy or LBT statistics is performed according to rules configured by a network node for the UE or predefined for the UE, and **characterised in that** the rules comprise one of:
(i) in a case where
the monitored channel occupancy or LBT/CCA failure ratio characterizing the LBT/CCA statistics is below a predetermined threshold, or measurements of the monitored channel occupancy indicate that there is no other access device contends the channel with the UE, and
if a first channel access priority level for an on-going channel access procedure associated with a first transmission is not higher than a second channel access priority level for a new channel access procedure associated with a second transmission, the UE preempts the on-going channel access procedure with the new channel access procedure for the second transmission;
(ii) in a case where
the monitored channel occupancy or LBT/CCA failure ratio characterizing the LBT/CCA statistics is not below a predetermined threshold,
if a first channel access priority level for an on-going channel access procedure associated with a first transmission is not higher than a second channel access priority level for a new channel access procedure associated with a second transmission, the UE using the on-going channel access procedure for the second transmission, and
if the first channel access priority level for the on-going channel access procedure associated with the first transmission is higher than the second channel access priority level for the new channel access procedure associated with the second transmission, the UE preempting the on-going channel access procedure with the new channel access procedure for the second transmission.

11. A computer readable storage medium having computer program instructions stored thereon, the computer program instructions, when executed by at least one processor in a UE, causing the at least one processor to perform the method according to any of claims 1 to 9.

12. A method (400) at a network node, comprising:
configuring (S401), for a user equipment ,UE, rules of adapting a channel access procedure for a channel based on monitored channel occupancy or Listen-Before-Talk ,LBT/Clear Channel Assessment ,CCA, statistics of the channel, and **characterised in that** the rules comprise one of
(i) in a case where
the monitored channel occupancy or LBT/CCA failure ratio characterizing the LBT/CCA statistics is below a predetermined threshold, or measurements of the monitored channel occupancy indicate that there is no other access device contends the channel with the UE, and
if a first channel access priority level for an on-going channel access procedure associated with a first transmission is not higher than a second channel access priority level for a new channel access procedure associated with a second transmission, the UE preempting the on-going channel access procedure with the new channel access procedure for the second transmission;
(ii) in a case where
the monitored channel occupancy or LBT/CCA failure ratio characterizing the LBT/CCA statistics is not below a predetermined threshold,
if a first channel access priority level for an on-going channel access procedure associated with a first transmission is not higher than a second channel access priority level for a new channel access procedure associated with a second transmission, the UE using the on-going channel access procedure for the second transmission, and
if the first channel access priority level for the on-going channel access procedure associated with the first transmission is higher than the second channel access priority level for the new channel access procedure associated with the second transmission, the UE preempting the on-going channel access procedure with the new channel access procedure for the second transmission.

13. A network node (600), comprising:
at least one processor (601), and
at least one memory (603), storing instructions which, when executed on the at least one processor (601), cause the at least one processor (601) to:
configure, for a user equipment, UE, rules of adapting a channel access procedure for a channel based on monitored channel occupancy or Listen-Before-Talk, LBT/Clear Channel Assessment, CCA, statistics of the channel, and **characterised in that** the rules comprise one of:
(i) in a case where
the monitored channel occupancy or LBT/CCA failure ratio characterizing the LBT/CCA statistics is below a predetermined threshold, or measurements of the monitored channel occupancy indicate that there is no other access device contends the channel with the UE, and
if a first channel access priority level for an on-going channel access procedure associated with a first transmission is not higher than a second channel access priority level for a new channel access procedure associated with a second transmission, the UE preempts the on-going channel access procedure with the new channel access procedure for the second transmission;
(ii) in a case where
the monitored channel occupancy or LBT/CCA failure ratio characterizing the LBT/CCA statistics is not below a predetermined threshold,
if a first channel access priority level for an on-going channel access procedure associated with a first transmission is not higher than a second channel access priority level for a new channel access procedure associated with a second transmission, the LTE using the on-going channel access procedure for the second transmission, and
if the first channel access priority level for the on-going channel access procedure associated with the first transmission is higher than the second channel access priority level for the new channel access procedure associated with the second transmission, the UE preempting the on-going channel access procedure with the new channel access procedure for the second transmission.

14. A computer readable storage medium having computer program instructions stored thereon, the computer program instructions, when executed by at least one processor in a network node, causing the at least one processor to perform the method according to claim 12.

## Patentansprüche

1. Verfahren (100) auf einer Benutzereinrichtung, UE, Folgendes umfassend:
Überwachen (S101) von Kanalbelegung oder Listen-Before-Talk-/Freikanalanalyse-Statistiken, LBT-/CCA-Statistiken, eines Kanals; und
Anpassen (S103) einer Kanalzugriffsprozedur für den Kanal, basierend auf der überwachten Kanalbelegung oder LBT-/CCA-Statistiken, wobei
das Anpassen der Kanalzugriffsprozedur für den Kanal, basierend auf der überwachten Kanalbelegung oder LBT-Statistiken, gemäß Regeln durchgeführt wird, die von einem Netzwerkknoten für die UE konfiguriert oder für die UE vordefiniert werden, und **dadurch gekennzeichnet ist, dass** die Regeln eines der folgenden umfassen:
(i) in einem Fall, in dem die überwachte Kanalbelegung oder ein LBT-/CCA-Fehlerverhältnis, das die LBT-/CCA-Statistiken charakterisiert, unterhalb eines vorbestimmten Schwellenwerts liegt oder Messungen der überwachten Kanalbelegung anzeigen, dass kein anderes Zugriffsgerät mit der UE im Wettbewerb um den Kanal steht, und
wenn ein erstes Kanalzugriffsprioritätslevel für eine laufende Kanalzugriffsprozedur, die mit einer ersten Übertragung assoziiert ist, nicht höher ist als ein zweites Kanalzugriffsprioritätslevel für eine neue Kanalzugriffsprozedur, die mit einer zweiten Übertragung assoziiert ist, verdrängt die UE die laufende Kanalzugriffsprozedur mit der neuen Kanalzugriffsprozedur für die zweite Übertragung;
(ii) in einem Fall, in dem die überwachte Kanalbelegung oder ein LBT-/CCA-Fehlerverhältnis, das die LBT-/CCA-Statistiken charakterisiert, nicht unterhalb eines vorbestimmten Schwellenwerts liegt,
wenn ein erstes Kanalzugriffsprioritätslevel für eine laufende Kanalzugriffsprozedur, die mit einer ersten Übertragung assoziiert ist, nicht höher ist als ein zweites Kanalzugriffsprioritätslevel für eine neue Kanalzugriffsprozedur, die mit einer zweiten Übertragung assoziiert ist, nutzt die UE die laufende Kanalzugriffsprozedur für die zweite Übertragung, und
wenn das erstes Kanalzugriffsprioritätslevel für die laufende Kanalzugriffsprozedur, die mit der ersten Übertragung assoziiert ist, höher ist als das zweite Kanalzugriffsprioritätslevel für die neue Kanalzugriffsprozedur, die mit der zweiten Übertragung assoziiert ist, verdrängt die UE die laufende Kanalzugriffsprozedur mit der neuen Kanalzugriffsprozedur für die zweite Übertragung.

2. Verfahren (100) nach Anspruch 1, wobei jede der ersten Übertragung und der zweiten Übertragung Steuersignalisierungsübertragung oder Datenübertragung ist.

3. Verfahren (100) nach Anspruch 1, wobei die Regeln ferner Folgendes umfassen:
wenn die neue Kanalzugriffsprozedur für Steuersignalisierungsübertragung und die laufende Kanalzugriffsprozedur für Datenübertragung ist, verdrängt die UE die laufende Kanalzugriffsprozedur für die Datenübertragung mit der neuen Kanalzugriffsprozedur für die Steuersignalisierungsübertragung.

4. Verfahren (100) nach Anspruch 3, wobei die Steuersignalisierung mindestens eins von physischer Uplink-Steuerkanal-Signalisierung, PUCCH-Signalisierung, physikalischer Direktzugriffskanal-Signalisierung, PRACH-Signalisierung, Schallreferenzsignal-Signalisierung, SRS-Signalisierung, und Funkressourcensteuerung-Signalisierung, RRC-Signalisierung, umfasst.

5. Verfahren (100) nach Anspruch 1, wobei die Regeln ferner Folgendes umfassen:
unabhängig davon, ob ein erstes Kanalzugriffsprioritätslevel für eine laufende Kanalzugriffsprozedur, die mit einer ersten Übertragung assoziiert ist, höher oder niedriger ist als ein zweites Kanalzugriffsprioritätslevel für eine neue Kanalzugriffsprozedur, die mit einer zweiten Übertragung assoziiert ist, verdrängt die UE die laufende Kanalzugriffsprozedur mit der neuen Kanalzugriffsprozedur für die zweite Übertragung in einem Fall, in dem eine der folgenden Bedingungen erfüllt wird:
• ein N-Wert zum Bestimmen einer Zeitdauer, für die der Kanal als inaktiv vor Übertragung auf dem Kanal erfasst wird, wird zufällig gemäß dem zweiten Kanalzugriffsprioritätslevel erzeugt und eine insgesamt erforderliche Zeit für die neue Kanalzugriffsprozedur für die zweite Übertragung ist kürzer als eine verbleibende Zeitdauer der laufenden Kanalzugriffsprozedur;
• während einer maximalen Kanalbelegungszeitdauer, MCOT, gemäß dem ersten Kanalzugriffsprioritätslevel oder dem zweiten Kanalzugriffsprioritätslevel, kann die UE eine erwartete zukünftige Übertragung beenden, damit ihr Puffer geleert wird.

6. Verfahren (100) nach Anspruch 1, wobei die Regeln ferner Folgendes umfassen:
für eine geplante Übertragung, die mit einem ersten Kanalzugriffsprioritätslevel vorkonfiguriert wurde, wählt die UE ein zweites Kanalzugriffsprioritätslevel gemäß einer erforderlichen Kanalbelegungszeitdauer, COT, für die Übertragung, wobei das zweite Kanalzugriffsprioritätslevel niedriger ist als das erste Kanalzugriffsprioritätslevel.

7. Verfahren (100) nach Anspruch 1, wobei die Regeln ferner Folgendes umfassen:
in einem Fall, in dem eine Genehmigung für mindestens einen Dienst konfiguriert ist, nutzt die UE eine Kanalzugriffsprozedur, die mit einem Kanalzugriffsprioritätslevel assoziiert ist, das sich auf einen von dem mindestens einen Dienst für eine Übertragung bezieht, die mit dem einen Dienst assoziiert ist.

8. Verfahren (100) nach einem der Ansprüche 1 bis 7, wobei die von dem Netzwerkknoten konfigurierten Regeln über UEspezifische Signalisierung oder zellspezifische Signalisierung auf die UE angewendet werden.

9. Verfahren (100) nach einem der Ansprüche 1 bis 8, wobei die Regeln jeweils für eines der Folgenden erstellt werden: UE, Medienzugriffssteuerung, MAC, Einheit, Zelle, Träger, Bandbreitenteil, BWP, Kanal, Teilband.

10. Benutzereinrichtung, UE, (300), Folgendes umfassend:
mindestens einen Prozessor (301), und
mindestens einen Speicher (303), der Anweisungen speichert, die, wenn sie auf dem mindestens einen Prozessor (301) ausgeführt werden, den mindestens einen Prozessor (301) zu Folgendem veranlassen:
Kanalbelegung oder Listen-Before-Talk-/Freikanalanalyse-Statistiken, LBT-/CCA-Statistiken, eines Kanals zu überwachen; und
eine Kanalzugriffsprozedur für den Kanal, basierend auf der überwachten Kanalbelegung oder LBT-/CCA-Statistiken anzupassen, wobei Veranlassen des mindestens einen Prozessors (301), die Kanalzugriffsprozedur für den Kanal, basierend auf der überwachten Kanalbelegung oder LBT-Statistiken, zu ändern, gemäß Regeln durchgeführt wird, die von einem Netzwerkknoten für die UE konfiguriert oder für die UE vordefiniert werden, und **dadurch gekennzeichnet, dass** die Regeln eines der Folgenden umfassen:
(i) in einem Fall, in dem die überwachte Kanalbelegung oder ein LBT-/CCA-Fehlerverhältnis, das die LBT-/CCA-Statistiken charakterisiert, unterhalb eines vorbestimmten Schwellenwerts liegt oder Messungen der überwachten Kanalbelegung anzeigen, dass kein anderes Zugriffsgerät mit der UE im Wettbewerb um den Kanal steht, und
wenn ein erstes Kanalzugriffsprioritätslevel für eine laufende Kanalzugriffsprozedur, die mit einer ersten Übertragung assoziiert ist, nicht höher ist als ein zweites Kanalzugriffsprioritätslevel für eine neue Kanalzugriffsprozedur, die mit einer zweiten Übertragung assoziiert ist, verdrängt die UE die laufende Kanalzugriffsprozedur mit der neuen Kanalzugriffsprozedur für die zweite Übertragung;
(ii) in einem Fall, in dem die überwachte Kanalbelegung oder ein LBT-/CCA-Fehlerverhältnis, das die LBT-/CCA-Statistiken charakterisiert, nicht unterhalb eines vorbestimmten Schwellenwerts liegt,
wenn ein erstes Kanalzugriffsprioritätslevel für eine laufende Kanalzugriffsprozedur, die mit einer ersten Übertragung assoziiert ist, nicht höher ist als ein zweites Kanalzugriffsprioritätslevel für eine neue Kanalzugriffsprozedur, die mit einer zweiten Übertragung assoziiert ist, nutzt die UE die laufende Kanalzugriffsprozedur für die zweite Übertragung, und
wenn das erstes Kanalzugriffsprioritätslevel für die laufende Kanalzugriffsprozedur, die mit der ersten Übertragung assoziiert ist, höher ist als das zweite Kanalzugriffsprioritätslevel für die neue Kanalzugriffsprozedur, die mit der zweiten Übertragung assoziiert ist, verdrängt die UE die laufende Kanalzugriffsprozedur mit der neuen Kanalzugriffsprozedur für die zweite Übertragung.

11. Computerlesbares Speichermedium, auf dem Computerprogrammanweisungen gespeichert sind, wobei die Computerprogrammanweisungen, wenn sie durch mindestens einen Prozessor in einer UE ausgeführt werden, den mindestens einen Prozessor dazu veranlassen, das Verfahren nach einem der Ansprüche 1 bis 9 durchzuführen.

12. Verfahren (400) an einem Netzwerkknoten, Folgendes umfassend:
Konfigurieren (S401), für eine Benutzereinrichtung, UE, von Regeln zum Anpassen einer Kanalzugriffsprozedur für einen Kanal basierend auf der überwachten Kanalbelegung oder Listen-Before-Talk-/Freikanalanalyse-Statistiken, LBT-/CCA-Statistiken, des Kanals, und **dadurch gekennzeichnet, dass** die Regeln eines der Folgenden umfassen:
(i) in einem Fall, in dem die überwachte Kanalbelegung oder ein LBT-/CCA-Fehlerverhältnis, das die LBT-/CCA-Statistiken charakterisiert, unterhalb eines vorbestimmten Schwellenwerts liegt oder Messungen der überwachten Kanalbelegung anzeigen, dass kein anderes Zugriffsgerät mit der UE im Wettbewerb um den Kanal steht, und
wenn ein erstes Kanalzugriffsprioritätslevel für eine laufende Kanalzugriffsprozedur, die mit einer ersten Übertragung assoziiert ist, nicht höher ist als ein zweites Kanalzugriffsprioritätslevel für eine neue Kanalzugriffsprozedur, die mit einer zweiten Übertragung assoziiert ist, verdrängt die UE die laufende Kanalzugriffsprozedur mit der neuen Kanalzugriffsprozedur für die zweite Übertragung;
(ii) in einem Fall, in dem die überwachte Kanalbelegung oder ein LBT-/CCA-Fehlerverhältnis, das die LBT-/CCA-Statistiken charakterisiert, nicht unterhalb eines vorbestimmten Schwellenwerts liegt,
wenn ein erstes Kanalzugriffsprioritätslevel für eine laufende Kanalzugriffsprozedur, die mit einer ersten Übertragung assoziiert ist, nicht höher ist als ein zweites Kanalzugriffsprioritätslevel für eine neue Kanalzugriffsprozedur, die mit einer zweiten Übertragung assoziiert ist, nutzt die UE die laufende Kanalzugriffsprozedur für die zweite Übertragung, und
wenn das erstes Kanalzugriffsprioritätslevel für die laufende Kanalzugriffsprozedur, die mit der ersten Übertragung assoziiert ist, höher ist als das zweite Kanalzugriffsprioritätslevel für die neue Kanalzugriffsprozedur, die mit der zweiten Übertragung assoziiert ist, verdrängt die UE die laufende Kanalzugriffsprozedur mit der neuen Kanalzugriffsprozedur für die zweite Übertragung.

13. Netzwerkknoten (600), Folgendes umfassend:
mindestens einen Prozessor (601), und
mindestens einen Speicher (603), der Anweisungen speichert, die, wenn sie auf dem mindestens einen Prozessor (601) ausgeführt werden, den mindestens einen Prozessor (601) zu Folgendem veranlassen:
für eine Benutzereinrichtung, UE, Regeln zum Anpassen einer Kanalzugriffsprozedur für einen Kanal zu konfigurieren, basierend auf der überwachten Kanalbelegung oder Listen-Before-Talk-/Freikanalanalyse-Statistiken, LBT-/CCA-Statistiken, des Kanals, und **dadurch gekennzeichnet, dass** die Regeln eines der Folgenden umfassen:
(i) in einem Fall, in dem die überwachte Kanalbelegung oder ein LBT-/CCA-Fehlerverhältnis, das die LBT-/CCA-Statistiken charakterisiert, unterhalb eines vorbestimmten Schwellenwerts liegt oder Messungen der überwachten Kanalbelegung anzeigen, dass kein anderes Zugriffsgerät mit der UE im Wettbewerb um den Kanal steht, und
wenn ein erstes Kanalzugriffsprioritätslevel für eine laufende Kanalzugriffsprozedur, die mit einer ersten Übertragung assoziiert ist, nicht höher ist als ein zweites Kanalzugriffsprioritätslevel für eine neue Kanalzugriffsprozedur, die mit einer zweiten Übertragung assoziiert ist, verdrängt die UE die laufende Kanalzugriffsprozedur mit der neuen Kanalzugriffsprozedur für die zweite Übertragung;
(ii) in einem Fall, in dem die überwachte Kanalbelegung oder ein LBT-/CCA-Fehlerverhältnis, das die LBT-/CCA-Statistiken charakterisiert, nicht unterhalb eines vorbestimmten Schwellenwerts liegt,
wenn ein erstes Kanalzugriffsprioritätslevel für eine laufende Kanalzugriffsprozedur, die mit einer ersten Übertragung assoziiert ist, nicht höher ist als ein zweites Kanalzugriffsprioritätslevel für eine neue Kanalzugriffsprozedur, die mit einer zweiten Übertragung assoziiert ist, nutzt die UE die laufende Kanalzugriffsprozedur für die zweite Übertragung, und
wenn das erstes Kanalzugriffsprioritätslevel für die laufende Kanalzugriffsprozedur, die mit der ersten Übertragung assoziiert ist, höher ist als das zweite Kanalzugriffsprioritätslevel für die neue Kanalzugriffsprozedur, die mit der zweiten Übertragung assoziiert ist, verdrängt die UE die laufende Kanalzugriffsprozedur mit der neuen Kanalzugriffsprozedur für die zweite Übertragung.

14. Computerlesbares Speichermedium, auf dem Computerprogrammanweisungen gespeichert sind, wobei die Computerprogrammanweisungen, wenn sie durch mindestens einen Prozessor in einem Netzwerkknoten ausgeführt werden, den mindestens einen Prozessor dazu veranlassen, das Verfahren nach Anspruch 12 durchzuführen.

## Revendications

1. Procédé (100) au niveau d'un équipement utilisateur, UE, comprenant :
la surveillance (S101) d'occupation de canal ou de statistiques d'écoute avant transmission LBT/d'évaluation de canal libre, CCA, d'un canal ; et
l'adaptation (S103) d'une procédure d'accès à un canal pour le canal sur la base de l'occupation de canal ou des statistiques LBT/CCA surveillées, dans lequel
ladite adaptation de la procédure d'accès à un canal pour le canal sur la base de l'occupation de canal ou des statistiques LBT surveillées est effectuée en fonction de règles configurées par un noeud de réseau pour l'UE ou prédéfinies pour l'UE, et **caractérisé en ce que** les règles comprennent l'un parmi :
(i) dans le cas où l'occupation de canal ou le taux d'échec LBT/CCA surveillé(e) caractérisant les statistiques LBT/CCA est inférieur(e) à un seuil prédéterminé, ou des mesures de l'occupation de canal surveillée indiquent qu'aucun autre dispositif d'accès ne se dispute le canal avec l'UE, et
si un premier niveau de priorité d'accès à un canal pour une procédure d'accès à un canal en cours associée à une première transmission n'est pas supérieur à un second niveau de priorité d'accès à un canal pour une nouvelle procédure d'accès à un canal associée à une seconde transmission, l'UE remplace la procédure d'accès à un canal en cours par la nouvelle procédure d'accès à un canal pour la seconde transmission ;
(ii) dans le cas où l'occupation de canal ou le taux d'échec LBT/CCA surveillé(e) caractérisant les statistiques LBT/CCA n'est pas inférieur(e) à un seuil prédéterminé,
si un premier niveau de priorité d'accès à un canal pour une procédure d'accès à un canal en cours associée à une première transmission n'est pas supérieur à un second niveau de priorité d'accès à un canal pour une nouvelle procédure d'accès à un canal associée à une seconde transmission, l'UE utilise la procédure d'accès à un canal en cours pour la seconde transmission, et
si le premier niveau de priorité d'accès à un canal pour la procédure d'accès à un canal en cours associée à la première transmission est supérieur au second niveau de priorité d'accès à un canal pour la nouvelle procédure d'accès à un canal associée à la seconde transmission, l'UE remplace la procédure d'accès à un canal en cours par la nouvelle procédure d'accès à un canal pour la seconde transmission.

2. Procédé (100) selon la revendication 1, dans lequel chacune de la première transmission et de la seconde transmission est une transmission de signalisation de commande ou une transmission de données.

3. Procédé (100) selon la revendication 1, dans lequel les règles comprennent en outre :
si la nouvelle procédure d'accès à un canal est destinée à une transmission de signalisation de commande et que la procédure d'accès à un canal en cours est destinée à une transmission de données, l'UE remplace la procédure d'accès à un canal en cours pour la transmission de données par la nouvelle procédure d'accès à un canal pour la transmission de signalisation de commande.

4. Procédé (100) selon la revendication 3, dans lequel la signalisation de commande comprend au moins une signalisation parmi une signalisation de canal de commande de liaison montante physique, PUCCH, de canal d'accès aléatoire physique, PRACH, de signal de référence de sondage, SRS, et de commande de ressources radio, RRC.

5. Procédé (100) selon la revendication 1, dans lequel les règles comprennent en outre :
peu importe si un premier niveau de priorité d'accès à un canal pour une procédure d'accès à un canal en cours associée à une première transmission est supérieur ou inférieur à un second niveau de priorité d'accès à un canal pour une nouvelle procédure d'accès à un canal associée à une seconde transmission, l'UE remplace la procédure d'accès à un canal en cours par la nouvelle procédure d'accès à un canal pour la seconde transmission dans le cas où l'une des conditions suivantes est remplie :
• une valeur N pour déterminer une durée pendant laquelle le canal est détecté comme étant inactif avant la transmission sur le canal est générée de manière aléatoire en fonction du second niveau de priorité d'accès à un canal, et une durée totale requise pour la nouvelle procédure d'accès à un canal pour la seconde transmission est plus courte qu'une durée de repos de la procédure d'accès à un canal en cours ;
• pendant un temps d'occupation de canal maximal, MCOT, en fonction du premier niveau de priorité d'accès à un canal ou du second niveau de priorité d'accès à un canal, l'UE peut terminer une transmission future attendue pour vider sa mémoire tampon.

6. Procédé (100) selon la revendication 1, dans lequel les règles comprennent en outre :
pour une transmission planifiée préconfigurée avec un premier niveau de priorité d'accès à un canal, l'UE sélectionne un second niveau de priorité d'accès à un canal en fonction d'un temps d'occupation de canal, COT, requis pour la transmission, dans lequel le second niveau de priorité d'accès à un canal est inférieur au premier niveau de priorité d'accès à un canal.

7. Procédé (100) selon la revendication 1, dans lequel les règles comprennent en outre :
dans le cas où une autorisation est configurée pour au moins un service, l'UE utilise une procédure d'accès à un canal associée à un niveau de priorité d'accès à un canal qui est associé à l'un de l'au moins un service pour une transmission associée audit service.

8. Procédé (100) selon l'une quelconque des revendications 1 à 7, dans lequel les règles configurées par le noeud de réseau sont appliquées à l'UE via une signalisation spécifique à un UE ou une signalisation spécifique à une cellule.

9. Procédé (100) selon l'une quelconque des revendications 1 à 8, dans lequel les règles sont établies pour l'un parmi un UE, une commande d'accès au support, MAC, une entité, une cellule, une porteuse, une partie de bande passante, BWP, un canal, une sous-bande.

10. Équipement utilisateur, UE, (300), comprenant :
au moins un processeur (301), et
au moins une mémoire (303), stockant des instructions qui, lorsqu'elles sont exécutées sur l'au moins un processeur (301), amènent l'au moins un processeur (301) à :
surveiller une occupation de canal ou des statistiques d'écoute avant transmission, LBT/d'évaluation de canal libre, CCA d'un canal ; et
adapter une procédure d'accès à un canal pour le canal sur la base de l'occupation de canal ou des statistiques LBT/CCA surveillées, dans lequel le fait d'amener l'au moins un processeur (301) à adapter la procédure d'accès à un canal pour le canal sur la base de l'occupation de canal ou des statistiques LBT surveillées est effectué en fonction de règles configurées par un noeud de réseau pour l'UE ou prédéfinies pour l'UE, et **caractérisé en ce que** les règles comprennent l'un parmi :
(i) dans le cas où l'occupation de canal ou le taux d'échec LBT/CCA surveillé(e) caractérisant les statistiques LBT/CCA est inférieur(e) à un seuil prédéterminé, ou des mesures de l'occupation de canal surveillée indiquent qu'aucun autre dispositif d'accès ne se dispute le canal avec l'UE, et
si un premier niveau de priorité d'accès à un canal pour une procédure d'accès à un canal en cours associée à une première transmission n'est pas supérieur à un second niveau de priorité d'accès à un canal pour une nouvelle procédure d'accès à un canal associée à une seconde transmission, l'UE remplace la procédure d'accès à un canal en cours par la nouvelle procédure d'accès à un canal pour la seconde transmission ;
(ii) dans le cas où l'occupation de canal ou le taux d'échec LBT/CCA surveillé(e) caractérisant les statistiques LBT/CCA n'est pas inférieur(e) à un seuil prédéterminé,
si un premier niveau de priorité d'accès à un canal pour une procédure d'accès à un canal en cours associée à une première transmission n'est pas supérieur à un second niveau de priorité d'accès à un canal pour une nouvelle procédure d'accès à un canal associée à une seconde transmission, l'UE utilise la procédure d'accès à un canal en cours pour la seconde transmission, et
si le premier niveau de priorité d'accès à un canal pour la procédure d'accès à un canal en cours associée à la première transmission est supérieur au second niveau de priorité d'accès à un canal pour la nouvelle procédure d'accès à un canal associée à la seconde transmission, l'UE remplace la procédure d'accès à un canal en cours par la nouvelle procédure d'accès à un canal pour la seconde transmission.

11. Support de stockage lisible par ordinateur sur lequel sont stockées des instructions de programme informatique, les instructions de programme informatique, lorsqu'elles sont exécutées par au moins un processeur dans un UE, amènent l'au moins un processeur à exécuter le procédé selon l'une quelconque des revendications 1 à 9.

12. Procédé (400) au niveau d'un noeud de réseau, comprenant :
la configuration (S401), pour un équipement utilisateur, UE, de règles d'adaptation d'une procédure d'accès à un canal pour un canal sur la base d'une occupation de canal ou de statistiques d'écoute avant transmission, LBT/d'évaluation de canal libre, CCA, surveillées du canal, et caractérisé en que les règles comprennent l'un parmi :
(i) dans le cas où l'occupation de canal ou le taux d'échec LBT/CCA surveillé(e) caractérisant les statistiques LBT/CCA est inférieur(e) à un seuil prédéterminé, ou des mesures de l'occupation de canal surveillée indiquent qu'aucun autre dispositif d'accès ne se dispute le canal avec l'UE, et
si un premier niveau de priorité d'accès à un canal pour une procédure d'accès à un canal en cours associée à une première transmission n'est pas supérieur à un second niveau de priorité d'accès à un canal pour une nouvelle procédure d'accès à un canal associée à une seconde transmission, l'UE remplace la procédure d'accès à un canal en cours par la nouvelle procédure d'accès à un canal pour la seconde transmission ;
(ii) dans le cas où l'occupation de canal ou le taux d'échec LBT/CCA surveillé(e) caractérisant les statistiques LBT/CCA n'est pas inférieur(e) à un seuil prédéterminé,
si un premier niveau de priorité d'accès à un canal pour une procédure d'accès à un canal en cours associée à une première transmission n'est pas supérieur à un second niveau de priorité d'accès à un canal pour une nouvelle procédure d'accès à un canal associée à une seconde transmission, l'UE utilise la procédure d'accès à un canal en cours pour la seconde transmission, et
si le premier niveau de priorité d'accès à un canal pour la procédure d'accès à un canal en cours associée à la première transmission est supérieur au second niveau de priorité d'accès à un canal pour la nouvelle procédure d'accès à un canal associée à la seconde transmission, l'UE remplace la procédure d'accès à un canal en cours par la nouvelle procédure d'accès à un canal pour la seconde transmission.

13. Noeud de réseau (600), comprenant :
au moins un processeur (601), et
au moins une mémoire (603), stockant des instructions qui, lorsqu'elles sont exécutées sur l'au moins un processeur (601), amènent l'au moins un processeur (601) à :
configurer, pour un équipement utilisateur, UE, des règles d'adaptation d'une procédure d'accès à un canal pour un canal sur la base d'une occupation de canal ou de statistiques d'écoute avant transmission, LBT/d'évaluation de canal libre, CCA, surveillées du canal, et caractérisé en que les règles comprennent l'un parmi :
(i) dans le cas où l'occupation de canal ou le taux d'échec LBT/CCA surveillé(e) caractérisant les statistiques LBT/CCA est inférieur(e) à un seuil prédéterminé, ou des mesures de l'occupation de canal surveillée indiquent qu'aucun autre dispositif d'accès ne se dispute le canal avec l'UE, et
si un premier niveau de priorité d'accès à un canal pour une procédure d'accès à un canal en cours associée à une première transmission n'est pas supérieur à un second niveau de priorité d'accès à un canal pour une nouvelle procédure d'accès à un canal associée à une seconde transmission, l'UE remplace la procédure d'accès à un canal en cours par la nouvelle procédure d'accès à un canal pour la seconde transmission ;
(ii) dans le cas où l'occupation de canal ou le taux d'échec LBT/CCA surveillé(e) caractérisant les statistiques LBT/CCA n'est pas inférieur(e) à un seuil prédéterminé,
si un premier niveau de priorité d'accès à un canal pour une procédure d'accès à un canal en cours associée à une première transmission n'est pas supérieur à un second niveau de priorité d'accès à un canal pour une nouvelle procédure d'accès à un canal associée à une seconde transmission, l'UE utilise la procédure d'accès à un canal en cours pour la seconde transmission, et
si le premier niveau de priorité d'accès à un canal pour la procédure d'accès à un canal en cours associée à la première transmission est supérieur au second niveau de priorité d'accès à un canal pour la nouvelle procédure d'accès à un canal associée à la seconde transmission, l'UE remplace la procédure d'accès à un canal en cours par la nouvelle procédure d'accès à un canal pour la seconde transmission.

14. Support de stockage lisible par ordinateur sur lequel sont stockées des instructions de programme informatique, les instructions de programme informatique lorsqu'elles sont exécutées par au moins un processeur dans un noeud de réseau, amènent l'au moins un processeur à exécuter le procédé selon la revendication 12.
